(19) Europäisches Patentamt
European Patent Office
Office européen des brevets

(11) **EP 4 671 819 A1**

(12) **EUROPEAN PATENT APPLICATION**
published in accordance with Art. 153(4) EPC

(43) Date of publication:
**31.12.2025 Bulletin 2026/01**

(21) Application number: **23927865.8**

(22) Date of filing: **17.03.2023**

(51) International Patent Classification (IPC):
**G01S 7/4865** (2020.01)

(52) Cooperative Patent Classification (CPC):
**G01S 7/4865**

(86) International application number:
**PCT/CN2023/082046**

(87) International publication number:
**WO 2024/192546 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Yinwang Intelligent
Technologies Co., Ltd.
Shenzhen, Guangdong 518110 (CN)**

(72) Inventors:
• **HAN, Erjiang
Shenzhen, Guangdong 518129 (CN)**
• **SHI, Xianling
Shenzhen, Guangdong 518129 (CN)**
• **CAO, Guoliang
Shenzhen, Guangdong 518129 (CN)**
• **YU, Zhong
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **DETECTION METHOD AND RELATED APPARATUS**

(57) This application provides a detection method and a related apparatus, and relates to the field of optoelectronic technologies. The method includes: receiving an echo beam, where the echo beam is emitted to a first pixel of a detector, and the first pixel includes N sub-pixels; determining N first optical sub-signals based on the N sub-pixels, where N is a positive integer; determining N first echo parameters based on the N first optical sub-signals, where the first echo parameter represents signal strength of the first optical sub-signal; and determining a first optical signal based on the N first echo parameters, where the first optical signal corresponds to the echo beam. Based on this solution, a case in which light spot distribution of the echo beam on the detector is uneven, and consequently the light spot distribution changes when a light spot shifts, resulting in inaccurate error compensation for a target parameter calculated by a lidar system can be avoided. This helps improve accuracy of error compensation.

```
S310: Receive an echo beam, where the echo beam is emitted to a first pixel of a detector,
and the first pixel includes N sub-pixels
           │
S320: Determine N first optical sub-signals based on the N sub-pixels
           │
S330: Determine N first echo parameters based on the N first optical sub-signals, where the
first echo parameter represents signal strength of the first optical sub-signal
           │
S340: Determine a first optical signal based on the N first echo parameters, where the first
optical signal corresponds to the echo beam
```

FIG. 3

EP 4 671 819 A1

## Description

### TECHNICAL FIELD

This application relates to the field of optoelectronic technologies, and more specifically, to a detection method and a related apparatus.

### BACKGROUND

A lidar (light detection and ranging, Lidar) is characterized by high resolution and a strong capability of resistance to active jamming, and therefore is widely used in various technical fields. In a lidar system, a lidar emits a laser beam to a to-be-detected target object. After reaching the target object, the laser beam is reflected, and then is received by a signal detector in a form of echo beam. The echo beam is emitted to a pixel array of the signal detector to form a light spot, and the pixel array converts the echo beam from an optical signal into an electrical signal. Then, some parameters are determined based on the electrical signal, so that target parameters such as a current distance between the lidar and the target object and reflectivity of the target object can be obtained through calculation, to implement functions such as target ranging and target recognition.

In the lidar system, an error usually exists during calculation of a target parameter based on an echo signal that corresponds to specified light spot distribution and that is responded to. Therefore, error compensation may be performed, based on an error compensation table, on the target parameter corresponding to the light spot distribution. However, because a system device is aged, a temperature of the system device changes, and a distance between the target object and a laser changes, the light spot distribution usually changes. Therefore, if the target parameter is still compensated based on the error compensation table, accuracy of compensating the target parameter cannot be ensured.

Therefore, how to perform error compensation on the target parameter calculated by the lidar system and improve accuracy of error compensation as much as possible is an urgent problem to be resolved.

### SUMMARY

Embodiments of this application provide a detection method and a related apparatus, to avoid a case in which light spot distribution of an echo beam on a detector is uneven, and consequently the light spot distribution changes when a light spot shifts, resulting in inaccurate error compensation for a target parameter calculated by a lidar system. This helps improve accuracy of error compensation.

According to a first aspect, a detection method is provided, applied to a detector. The method includes: receiving an echo beam, where the echo beam is emitted to a first pixel of a detector, and the first pixel includes N sub-pixels; determining N first optical sub-signals based on the N sub-pixels, where N is a positive integer; determining N first echo parameters based on the N first optical sub-signals, where the first echo parameter represents signal strength of the first optical sub-signal; and determining a first optical signal based on the N first echo parameters, where the first optical signal corresponds to the echo beam.

For example, the echo beam is finally presented in a form of light spot on a pixel array of the detector. Therefore, when the light spot occupies a plurality of pixels, an optical signal determined based on the echo beam corresponds to a part of the light spot. When the light spot occupies only the first pixel, an optical signal determined based on the echo beam corresponds to all of the light spot.

For example, the first pixel is used as an example. The first pixel may be divided into the N sub-pixels with a same geometric parameter. A specific geometric parameter is not limited in embodiments of this application. In addition, the first pixel may alternatively be divided into the N sub-pixels with different geometric parameters, or the first pixel may be divided into a part of sub-pixels with a first geometric parameter, a part of sub-pixels with a second geometric parameter, and the like.

For example, in the pixel array, a manner of dividing each pixel in the pixel array may be adjusted in real time based on current light spot distribution, so that light spot distribution on each sub-pixel is even, thereby improving accuracy of subsequent error compensation.

It should be understood that the first optical signal is an optical signal obtained after compensation is performed based on the first echo parameter corresponding to each first optical sub-signal, and a target parameter included in the first optical signal can be accurately compensated.

Based on the foregoing technical solution, the first pixel is divided into the N sub-pixels. Because the sub-pixel is very small, light spot distribution on the sub-pixel is even or approximately even. When a target object distance or reflectivity of a target object is detected, regardless of how factors such as the target object distance and a temperature of a laser change, the light spot distribution on the sub-pixel remains unchanged. Therefore, the method helps avoid a problem that an error cannot be accurately compensated based on one compensation table due to a change of light spot distribution. In other words, according to the method, on a premise that the geometric parameters of the N sub-pixels are the same, an accurate compensation amount can be obtained based on one compensation table. This improves accuracy of error compensation, and is easy to implement.

With reference to the first aspect, in some implementations of the first aspect, a first sub-histogram is determined based on the first optical sub-signal, where the first sub-histogram includes a change trend of the signal strength of the first optical sub-signal in a plurality of unit time periods; and the first echo parameter is determined based on the first sub-histogram.

Based on the foregoing technical solution, the first echo parameter representing the signal strength of the first optical sub-signal is calculated based on the first sub-histogram. The method is easy to implement.

With reference to the first aspect, in some implementations of the first aspect, N first compensation sub-amounts are determined based on the N first echo parameters; and a first compensation amount is determined based on the N first compensation sub-amounts, where the first compensation amount is used to determine a compensation amount of the first optical signal.

For example, the first compensation sub-amount may be determined by searching the compensation table. The compensation table may be determined in advance through an experiment. Different sub-pixel geometric parameters correspond to different compensation tables. Based on this, when the geometric parameters of the N sub-pixels are the same, the first compensation amount can be determined based on one compensation table.

For example, for different compensation amounts, methods for determining the first compensation amount are different accordingly. Weighted accumulation may be performed on the N first compensation sub-amounts. The weighted accumulation may include two cases. In one case, a weight is 1. In this case, a weighted accumulation process is actually a direct accumulation process. In the other case, a weight is not 1. In addition, the N first compensation sub-amounts may alternatively be accumulated to obtain an average value.

Based on the foregoing technical solution, the N first echo parameters are determined based on the N first optical sub-signals received by the N sub-pixels, and the sub-pixel is very small. Therefore, even if the light spot corresponding to the echo beam shifts, for the N sub-pixels, when N is large enough, distribution of a part of the light spot on the sub-pixel is approximately even. Therefore, regardless of whether the light spot shifts, distribution of the part of the light spot corresponding to the N sub-pixels remains even, the N first compensation sub-amounts determined based on the N first echo parameters are accurate, and therefore the first compensation amount is accurate. This improves accuracy of error compensation.

With reference to the first aspect, in some implementations of the first aspect, a corresponding first compensation table is obtained through screening based on a geometric parameter of the sub-pixel; and the first compensation table is searched based on the first echo parameter to determine a first compensation sub-amount corresponding to the first echo parameter, where the first compensation table is determined in advance through an experiment, and the first compensation table includes a mapping relationship between the first echo parameter and the first compensation sub-amount.

Based on the foregoing technical solution, on a premise that the geometric parameters of the N sub-pixels are the same, the first compensation amount can be determined based on one compensation table. This improves accuracy of error compensation, and is easy to implement.

With reference to the first aspect, in some implementations of the first aspect, the geometric parameter of the sub-pixel includes a shape and/or an area of the sub-pixel.

Based on the foregoing technical solution, the shape and/or the area of the sub-pixel are/is used as the geometric parameter of the sub-pixel, so that first compensation tables corresponding to different sub-pixels can be properly determined. This helps ensure accuracy of error compensation.

With reference to the first aspect, in some implementations of the first aspect, the first echo parameter includes at least one of the following: an echo area, an echo peak value, and an echo pulse width that are of the first optical sub-signal, and a rising edge slope of a curve image in the first sub-histogram.

Based on the foregoing technical solution, the first compensation sub-amount may be determined based on at least one of the echo area, the echo peak value, and the echo pulse width that are of the first optical sub-signal, and the rising edge slope of the curve image in the first sub-histogram. This provides a plurality of methods for determining the compensation amount, thereby improving flexibility of the solution.

With reference to the first aspect, in some implementations of the first aspect, a first result value is determined based on a second optical signal, where the second optical signal is an original optical signal determined based on the echo beam; and the first result value is compensated based on the first compensation amount, to determine a first target parameter value, where the first target parameter value corresponds to the foregoing first optical signal.

For example, the first result value may be a target object distance, or may be an energy value of the second optical signal used to calculate the reflectivity of the target object. However, the first result value is a result value that is not compensated.

Based on the foregoing technical solution, the first result value is compensated based on the first compensation amount determined according to the foregoing method. This helps improve accuracy of the first target parameter value.

With reference to the first aspect, in some implementations of the first aspect, a first histogram is determined based on the second optical signal, where the first histogram includes a change trend of signal strength of the second optical signal in a plurality of unit time periods; and the first result value is determined based on the first histogram.

For example, an echo area, an echo pulse width, and an echo peak value that are of the second optical signal, and a rising edge slope of a curve image in the first histogram may be determined based on the first histogram.

For example, the echo area is an integral value of the curve image in the first histogram, and the echo pulse width may be classified into a first pulse width and a second pulse width. The first pulse width is also referred to as a full pulse width, and is a difference between horizontal coordinates of a start point and an end point of the curve image in the first histogram. The second pulse width is a pulse width corresponding to a specific proportion threshold, namely, a pulse width that is of the curve image in the first histogram and that is extracted horizontally at a preset position. The preset position may be a proper position like a position of 1/2 (in this case, the second pulse width is also referred to as a full pulse width at half maximum) or 1/3 of the curve image. For example, when the preset position is the position of 1/2 of the curve image, it is assumed that a vertical coordinate of a peak point of the curve image is y. In this case, vertical coordinates of two end points of the full pulse width at half maximum are y/2, a difference between horizontal coordinates of the two end points is the full pulse width at half maximum, and the echo peak value is the vertical coordinate of the peak point of the curve image in the first histogram. The signal strength of the second optical signal may be represented based on any one of the echo area, the echo pulse width, and the echo peak value that are of the second optical signal.

For example, to more accurately determine the signal strength of the second optical signal, a background light value of a current environment further needs to be determined, and an error of the background light value relative to the signal strength of the second optical signal needs to be eliminated.

It should be understood that, because the first optical sub-signal is a part of the second optical signal, a curve trend of the first sub-histogram is basically consistent with a curve trend of the first histogram. Therefore, the first echo parameter may alternatively be determined based on the first sub-histogram, and the first echo parameter includes at least one of the echo area, the echo pulse width, and the echo peak value that are of the first optical sub-signal.

For example, the first histogram may be extracted based on a first detection threshold, so that the first result value is calculated based on a part of an image above the first detection threshold. The first detection threshold is a proper preset value. Correspondingly, because the first sub-histogram is obtained by scaling down the first histogram in corresponding proportion, the first sub-histogram may alternatively correspond to a second detection threshold, and the second detection threshold is obtained by scaling down the first detection threshold in proportion. Alternatively, a start moment and an end moment of the first histogram may be determined based on the first histogram and the first detection threshold, and the start moment and the end moment also correspond to a start moment and an end moment of the first sub-histogram. Therefore, the first sub-histogram can be extracted without determining the second detection threshold.

Based on the foregoing technical solution, the first result value can be determined intuitively and simply based on the first histogram corresponding to the second optical signal. This helps improve calculation efficiency.

With reference to the first aspect, in some implementations of the first aspect, when the first result value is the distance from the target object, a moment at which a laser beam is emitted to the target object is determined as a first moment; a second moment is determined based on the first histogram; time of flight corresponding to the second optical signal is determined based on a time difference between the second moment and the first moment; and the first result value is determined based on a speed of light and the time of flight.

Based on the foregoing technical solution, the second moment is determined based on the first histogram, so that obtaining of the second moment is simple. This helps improve efficiency of calculating the first result value.

With reference to the first aspect, in some implementations of the first aspect, a start moment at which the second optical signal is detected is determined as the foregoing second moment based on first histogram; or a peak moment of the first histogram is used as the foregoing second moment based on the first histogram; or the second moment is determined based on the first histogram through constant fraction timing (constant fraction timing, CFD); or echo time corresponding to the second optical signal is determined based on the first histogram, and then the foregoing second moment is determined according to a centroid algorithm based on the echo time corresponding to the second optical signal.

Based on the foregoing technical solution, a plurality of methods for obtaining the second moment are provided, thereby improving flexibility of the method.

With reference to the first aspect, in some implementations of the first aspect, when the first result value is the energy value of the second optical signal, an echo area and/or the echo peak value of the second optical signal are/is determined based on the first histogram; the signal strength of the second optical signal is determined based on the echo area and/or the echo peak value of the second optical signal; and the first result value is determined based on the signal strength of the second optical signal.

Based on the foregoing technical solution, the signal strength of the second optical signal is determined based on the first histogram. The method is simple, and helps improve efficiency of calculating the first result value.

With reference to the first aspect, in some implementations of the first aspect, before the first compensation amount is determined based on the N first echo parameters, the first compensation table is determined, including: obtaining a second target parameter value and the geometric parameter of the sub-pixel, where the second target parameter value is an accurate target parameter value; determining the first optical sub-signal obtained based on the sub-pixel; determining a second result value based on the first echo parameter corresponding to the first optical sub-signal, where the second result value is a result value that needs to be compensated; determining the first compensation sub-amount based on the second result value and the second target parameter value; recording the first echo parameter corresponding to the first optical sub-signal, to determine the mapping relationship between the first echo parameter and the first compensation sub-amount; and adding the mapping relationship to the first compensation table corresponding to the geometric parameter of the sub-pixel.

For example, when the second target parameter value is a target object distance, the target object distance is an accurate distance value measured in advance. When the second target parameter value is an energy value of the second optical signal corresponding to the echo beam reflected by the target object, the energy value is an accurate energy value measured in advance.

For example, the geometric parameter of the sub-pixel is determined in a process of determining the manner of dividing the first pixel. The geometric parameter of the sub-pixel may be stored in a memory.

For example, when the second result value is a target object distance that has not been compensated, it may be learned from the description of the foregoing corresponding embodiments that the second result value may be obtained through calculation based on time of flight of the first optical sub-signal. When the second result value is an energy value of the first optical sub-signal that has not been compensated, it may be learned from the description of the foregoing corresponding embodiments that the second result value may be obtained through calculation based on the signal strength of the first optical sub-signal.

For example, when the first compensation sub-amount is a distance compensation sub-amount, the distance compensation sub-amount may be determined by calculating a difference between the second target parameter value and the second result value. When the first compensation sub-amount is an energy compensation sub-amount of the first optical sub-signal, the energy compensation sub-amount may be estimated based on the second target parameter value and the second result value.

For example, the second target parameter value is modified, the experiment mentioned in the foregoing method is repeated, and a plurality of determined mapping relationships are added to the first compensation table, to continuously expand the first compensation table, so that the first compensation table is continuously improved.

Based on the foregoing technical solution, corresponding first compensation tables are determined for sub-pixels with different geometric parameters according to a pre-experiment method. In this way, when the first pixel is divided into a plurality of sub-pixels with a same geometric parameter, the distance compensation amount can be accurately compensated based on the first compensation table determined through the foregoing experiment. Even if the first pixel is divided into a plurality of sub-pixels with geometric parameters which are not completely the same, for example, two types of geometric parameters, only two first compensation tables are required to accurately compensate for the distance compensation amount. This resolves a problem of difficulty in accurately performing error compensation in the conventional technology.

With reference to the first aspect, in some implementations of the first aspect, the N sub-pixels are obtained through division based on a single-photon avalanche diode SPAD in a pixel array.

For example, the SPAD includes a pixel activation region. Each pixel in the pixel activation region may be set in advance based on an initial parameter of the SPAD. The pixel is divided into a plurality of sub-pixels. The initial parameter includes a geometric parameter of each sub-pixel, for example, a length and a width of each pixel. Each sub-pixel is numbered. In addition, each pixel may also be numbered. In this way, some optical signals corresponding to each sub-pixel are distinguished.

Based on the foregoing technical solution, the first pixel is divided based on the SPAD, to provide a necessary prerequisite for a subsequent compensation solution based on the sub-pixel. This is a basis for accurate error compensation.

With reference to the first aspect, in some implementations of the first aspect, the echo beam is emitted to the pixel array to form a light spot, and a part of the light spot on each sub-pixel is evenly distributed.

Based on the foregoing technical solution, regardless of whether the light spot shifts or disperses, it can be ensured that the part of the light spot on the sub-pixel is evenly distributed, so that accuracy of subsequent error compensation can be further improved.

According to a second aspect, a detection apparatus is provided, used in a detector. The apparatus includes: a receiving unit, configured to receive an echo beam, where the echo beam is emitted to a first pixel of the detector, and the first pixel includes N sub-pixels; and a determining unit, configured to: determine N first optical sub-signals based on the N sub-pixels, where N is a positive integer; determine N first echo parameters based on the N first optical sub-signals, where the first echo parameter represents signal strength of the first optical sub-signal; and determine a first optical signal based on the N first echo parameters, where the first optical signal corresponds to the echo beam.

Based on the foregoing technical solution, the first pixel is divided into the N sub-pixels. Because the sub-pixel is very small, light spot distribution on the sub-pixel is even or approximately even. When a target object distance or reflectivity of a target object is detected, regardless of how factors such as the target object distance and a temperature of a laser change, the light spot distribution on the sub-pixel remains unchanged. Therefore, the method helps avoid a problem that an error cannot be accurately compensated based on one compensation table due to a change of light spot distribution. In other words, according to the method, on a premise that the geometric parameters of the N sub-pixels are the same, an accurate compensation amount can be obtained based on one compensation table. This improves accuracy of error compensation, and is easy to implement.

With reference to the second aspect, in some implementations of the second aspect, the determining unit is specifically configured to: determine a first sub-histogram based on the first optical sub-signal, where the first sub-histogram includes a change trend of the signal strength of the first optical sub-signal in a plurality of unit time periods; and determine the first echo parameter based on the first sub-histogram.

Based on the foregoing technical solution, the first echo parameter representing the signal strength of the first optical sub-signal is calculated based on the first sub-histogram. The method is easy to implement.

With reference to the second aspect, in some implementations of the second aspect, the determining unit is further configured to: determine N first compensation sub-amounts based on the N first echo parameters; and determine a first compensation amount based on the N first compensation sub-amounts, where the first compensation amount is used to determine a compensation amount of the first optical signal.

Based on the foregoing technical solution, the N first echo parameters are determined based on the N first optical sub-signals received by the N sub-pixels, and the sub-pixel is very small. Therefore, even if the light spot corresponding to the echo beam shifts, for the N sub-pixels, when N is large enough, distribution of a part of the light spot on the sub-pixel is approximately even. Therefore, regardless of whether the light spot shifts, distribution of the part of the light spot corresponding to the N sub-pixels remains even, the N first compensation sub-amounts determined based on the N first echo parameters are accurate, and therefore the first compensation amount is accurate. This improves accuracy of error compensation.

With reference to the second aspect, in some implementations of the second aspect, the determining unit is specifically configured to: obtain, based on a geometric parameter of the sub-pixel, a corresponding first compensation table through screening; and search the first compensation table based on the first echo parameter to determine a first compensation sub-amount corresponding to the first echo parameter, where the first compensation table is determined in advance through an experiment, and the first compensation table includes a mapping relationship between the first echo parameter and the first compensation sub-amount.

Based on the foregoing technical solution, on a premise that the geometric parameters of the N sub-pixels are the same, the first compensation amount can be determined based on one compensation table. This improves accuracy of error compensation, and is easy to implement.

With reference to the second aspect, in some implementations of the second aspect, the geometric parameter of the sub-pixel includes a shape and/or an area of the sub-pixel.

Based on the foregoing technical solution, the shape and/or the area of the sub-pixel are/is used as the geometric parameter of the sub-pixel, so that first compensation tables corresponding to different sub-pixels can be properly determined. This helps ensure accuracy of error compensation.

With reference to the second aspect, in some implementations of the second aspect, the first echo parameter includes at least one of the following: an echo area, an echo peak value, and an echo pulse width that are of the first optical sub-signal, and a rising edge slope of a curve image in the first sub-histogram.

Based on the foregoing technical solution, the first compensation sub-amount may be determined based on at least one of the echo area, the echo peak value, and the echo pulse width that are of the first optical sub-signal, and the rising edge slope of the curve image in the first sub-histogram. This provides a plurality of methods for determining the compensation amount, thereby improving flexibility of the solution.

With reference to the second aspect, in some implementations of the second aspect, the determining unit is further configured to: determine a first result value based on a second optical signal, where the second optical signal is an original optical signal determined based on the echo beam; and compensate the first result value based on the first compensation amount, to determine a first target parameter value, where the first target parameter value corresponds to the foregoing first optical signal.

Based on the foregoing technical solution, the first result value is compensated based on the first compensation amount determined according to the foregoing method. This helps improve accuracy of the first target parameter value.

With reference to the second aspect, in some implementations of the second aspect, the determining unit is specifically configured to: determine a first histogram based on the second optical signal, where the first histogram includes a change trend of signal strength of the second optical signal in a plurality of unit time periods; and determine the first result value based on the first histogram.

Based on the foregoing technical solution, the first result value can be determined intuitively and simply based on the first histogram corresponding to the second optical signal. This helps improve calculation efficiency.

With reference to the second aspect, in some implementations of the second aspect, when the first result value is the distance from the target object, the determining unit is specifically configured to: determine a moment at which a laser beam is emitted to the target object as a first moment; determine a second moment based on the first histogram; determine, based on a time difference between the second moment and the first moment, time of flight corresponding to the second optical signal; and determine the first result value based on a speed of light and the time of flight.

Based on the foregoing technical solution, the second moment is determined based on the first histogram, so that obtaining of the second moment is simple. This helps improve efficiency of calculating the first result value.

With reference to the second aspect, in some implementations of the second aspect, the determining unit is specifically configured to: determine, based on the first histogram, a start moment at which the second optical signal is detected as the second moment; or use a peak moment of the first histogram as the second moment based on the first histogram; or determine the second moment based on the first histogram through constant fraction timing CFD; or determine, based on the first histogram, echo time corresponding to the second optical signal, and then determine, according to a centroid algorithm, the second moment based on the echo time corresponding to the second optical signal.

Based on the foregoing technical solution, a plurality of methods for obtaining the second moment are provided, thereby improving flexibility of the method.

With reference to the second aspect, in some implementations of the second aspect, when the first result value is the energy value of the second optical signal, the determining unit is specifically configured to: determine an echo area and/or an echo peak value of the second optical signal based on the first histogram; determine the signal strength of the second optical signal based on the echo area and/or the echo peak value of the second optical signal; and determine the first result value based on the signal strength of the second optical signal.

Based on the foregoing technical solution, the signal strength of the second optical signal is determined based on the first histogram. The method is simple, and helps improve efficiency of calculating the first result value.

With reference to the second aspect, in some implementations of the second aspect, before the determining unit determines the first compensation amount based on the N first echo parameters, the determining unit is further configured to: determine the first compensation table, including: obtain a second target parameter value and the geometric parameter of the sub-pixel, where the second target parameter value is an accurate target parameter value; determine the first optical sub-signal obtained based on the sub-pixel; determine a second result value based on the first echo parameter corresponding to the first optical sub-signal, where the second result value is a result value that needs to be compensated; determine the first compensation sub-amount based on the second result value and the second target parameter value; record the first echo parameter corresponding to the first optical sub-signal, to determine the mapping relationship between the first echo parameter and the first compensation sub-amount; and add the mapping relationship to the first compensation table corresponding to the geometric parameter of the sub-pixel.

Based on the foregoing technical solution, corresponding first compensation tables are determined for sub-pixels with different geometric parameters according to a pre-experiment method. In this way, when the first pixel is divided into a plurality of sub-pixels with a same geometric parameter, the distance compensation amount can be accurately compensated based on the first compensation table determined through the foregoing experiment. Even if the first pixel is divided into a plurality of sub-pixels with geometric parameters which are not completely the same, for example, two types of geometric parameters, only two first compensation tables are required to accurately compensate for the distance compensation amount. This resolves a problem of difficulty in accurately performing error compensation in the conventional technology.

With reference to the second aspect, in some implementations of the second aspect, the N sub-pixels are obtained through division based on a single-photon avalanche diode SPAD in a pixel array.

Based on the foregoing technical solution, the first pixel is divided based on the SPAD, to provide a necessary prerequisite for a subsequent compensation solution based on the sub-pixel. This is a basis for accurate error compensation.

With reference to the second aspect, in some implementations of the second aspect, the echo beam is emitted to the pixel array to form a light spot, and a part of the light spot on each sub-pixel is evenly distributed.

Based on the foregoing technical solution, regardless of whether the light spot shifts or disperses, it can be ensured that the part of the light spot on the sub-pixel is evenly distributed, so that accuracy of subsequent error compensation can be further improved.

According to a third aspect, a detection apparatus is provided, including a processor and a memory. The processor is connected to the memory. The memory is configured to store program code, and the processor is configured to invoke the program code, to perform the method according to any one of the possible implementations of the method design in the first aspect.

According to a fourth aspect, a chip system is provided. The chip system is used in an electronic device. The chip system includes one or more interface circuits and one or more processors. The interface circuit and the processor are interconnected through a line. The interface circuit is configured to receive a signal from a memory of the electronic device and send the signal to the processor. The signal includes computer instructions stored in the memory. When the processor executes the computer instructions, the electronic device performs the method according to any one of the possible implementations of the method design in the first aspect.

According to a fifth aspect, a computer-readable storage medium is provided, and stores a computer program or instructions. The computer program or the instructions are used for implementing the method according to any one of the possible implementations of the method design in the first aspect.

According to a sixth aspect, a computer program product is provided. When computer program code or instructions are executed on a computer, the computer is enabled to perform the method according to any one of the possible implementations of the method design in the first aspect.

According to a seventh aspect, an embodiment of this application provides a vehicle. The vehicle includes the apparatus according to any one of the possible implementations in the second aspect and the third aspect.

## BRIEF DESCRIPTION OF DRAWINGS

FIG. 1 is a diagram of a lidar system according to an embodiment of this application;
FIG. 2 is a diagram of a relationship between a light spot offset and a target object distance according to an embodiment of this application;
FIG. 3 is a schematic flowchart of a detection method according to an embodiment of this application;
FIG. 4 is a diagram of pixel division according to an embodiment of this application;
FIG. 5 is a diagram of a first histogram according to an embodiment of this application;
FIG. 6 is a diagram of a first sub-histogram according to an embodiment of this application;
FIG. 7 is a diagram of a method for determining a first histogram according to an embodiment of this application;
FIG. 8 is a schematic flowchart of a method for determining a first result value according to an embodiment of this application;
FIG. 9 is a schematic flowchart of another method for determining a first result value according to an embodiment of this application;
FIG. 10 is a schematic flowchart of still another method for determining a first compensation table according to an embodiment of this application;
FIG. 11(a) to FIG. 11(d) are diagrams of a relationship between a first compensation sub-amount determined through an experiment and a first echo parameter according to an embodiment of this application;

FIG. 12 is a diagram of a detection system according to an embodiment of this application; and
FIG. 13 is a block diagram of a detection apparatus 1300 according to an embodiment of this application.

## DESCRIPTION OF EMBODIMENTS

The following describes the technical solutions in embodiments of this application with reference to the accompanying drawings in embodiments of this application. In the descriptions of embodiments of this application, "/" means "or" unless otherwise specified. For example, A/B may indicate A or B. In this specification, "and/or" describes only an association relationship for describing associated objects and indicates that three relationships may exist. For example, A and/or B may indicate the following three cases: Only A exists, both A and B exist, and only B exists.

Prefix words "first", "second", and the like in embodiments of this application are merely intended to distinguish between different objects, and impose no limitation on positions, sequences, priorities, quantities, content, or the like of the described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation. In addition, in the descriptions of embodiments, unless otherwise specified, "a plurality of" means two or more than two.

As an active sensor, a lidar is an indispensable key part in fields such as self-driving, robots, and unmanned aerial vehicles.

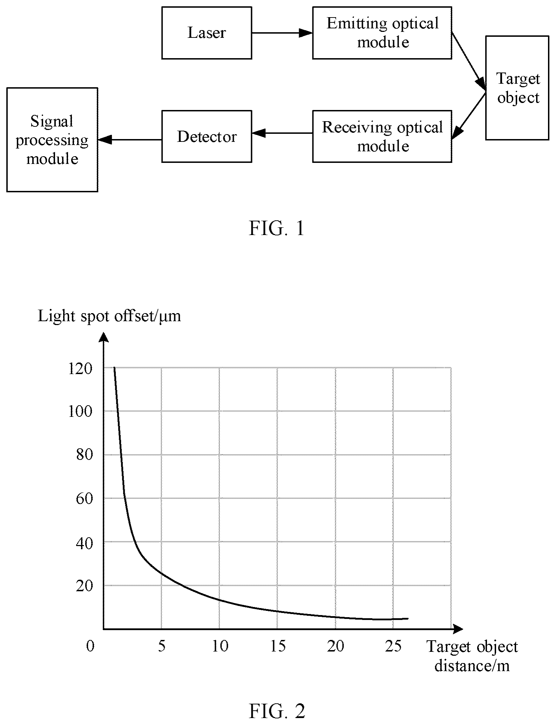

FIG. 1 is a diagram of a lidar system according to an embodiment of this application. The lidar usually includes a controller, a modulator, a signal transmitter, a signal detector, a processor, and a memory.

The controller may be configured to control the modulator and the signal transmitter to emit a laser beam with specified signal strength, or may be configured to control the signal detector to receive an echo beam, or may be configured to control the processor to process and calculate a related parameter included in an echo beam.

The modulator is configured to modulate a laser beam, so that the lidar can emit a laser beam with specified signal strength.

The signal transmitter usually includes a light source (also referred to as a laser) and an emitting optical lens configured to emit a laser beam to a target object. The emitting optical lens is configured to: refract the laser beam emitted by the light source, and transmit the laser beam to the target object based on a specified optical path.

The signal detector usually includes a detector (also referred to as a receiver) and a receiving optical lens, and is configured to: detect and receive an echo beam, convert the echo beam from an optical signal into an electrical signal, and determine signal strength of the echo beam in each time period, to generate a histogram of the echo beam. It may be learned that the histogram may represent the signal strength of the echo beam in each time period. The receiving optical lens is configured to: refract the echo beam reflected from the target object, and refract the echo beam to a specified position of the detector.

In some possible embodiments, the detector may be a single-photon avalanche diode (single-photon avalanche diode, SPAD) detector. The SPAD is included in a pixel array of the detector. The pixel array is configured to receive the echo beam. A light spot is formed on one or more pixels of the pixel array. In addition, the pixel array converts the echo beam from an optical signal into an electrical signal.

The processor is configured to: process the echo beam, determine the related parameter, perform error compensation on the related parameter, and finally calculate a first target parameter value. The first target parameter value includes a distance from the target object, reflectivity of the target object, and the like.

The memory is configured to store an intermediate result in a signal processing process.

In some possible embodiments, based on the lidar of the foregoing architecture, a distance between the target object and the laser may be detected. For ease of description, the distance is referred to as a target object distance for short in embodiments of this application. A working principle of measuring the target object distance is as follows:

The signal transmitter emits a laser beam to the target object. The laser beam is reflected by the target object, and is reflected to the signal detector in a form of echo beam. Correspondingly, a light spot is formed on one or more pixels in the pixel array of the signal detector, and the echo beam is converted from an optical signal into an electrical signal. Then, the processor may determine, based on a built-in timer (for example, a system clock), a time difference between a moment at which a transmit signal starts to be transmitted and a moment at which the transmit signal is finally received, to determine time of flight of the signal and obtain the target object distance through calculation based on the time of flight and a speed of light.

In some possible embodiments, based on the lidar of the foregoing architecture, the reflectivity of the target object may be detected. A working principle of the lidar of the foregoing architecture is as follows:

The signal transmitter emits a laser beam to the target object. The laser beam is reflected by the target object, is reflected to the signal receiver in a form of echo beam, and forms a light spot on a pixel array of the signal receiver. Then, the signal detector detects the echo beam, responds to the echo beam, and determines signal strength, that is, determines an energy value corresponding to the echo beam. In addition, the target object distance further needs to be determined. Then, the processor determines the reflectivity of the target object based on the energy value and the target object distance. Target objects of different surface materials fall into different categories. Therefore, the reflectivity of the target object may be used to identify a category of the target object.

For example, target parameters are the target object distance and the reflectivity of the target object. The target parameter is detected based on calculation performed after the light spot of the echo beam on the pixel array of the detector is finally converted into an electrical signal. If an imaging position of the light spot on the pixel array is a target receiving position, the light spot does not shift. The target receiving position may be a focal plane for receiving the light spot, and the light spot does not disperse on the pixel array. In this case, light spot distribution does not change. When these prerequisites are met, the target parameter calculated based on the electrical signal corresponding to the light spot is accurate.

A light spot shift is a shift of a position of a light spot on a plane of a pixel array. Because a receiving range of the pixel array is fixed, some optical signals cannot be received after the light spot shifts. Light spot dispersion means that a light spot imaging position is not on a plane of a pixel array, and after a light spot disperses, there is a deviation between responded optical signal strength and actual optical signal strength.

A lidar system is used as an example. FIG. 2 is a diagram of a relationship between a light spot offset of an off-axis lidar and a target object distance according to an embodiment of this application. It may be learned that, for the off-axis lidar, when the distance between the target object and the laser changes, the light spot shifts accordingly in a horizontal direction. When the distance between the lidar and the target object is shorter, the light spot offset is larger. Although the light spot offset is only at a micron level, the micron-level shift causes a large error in final calculation of the target object distance. Therefore, error compensation needs to be performed on a calculation result.

For the off-axis lidar, a transmit path and a receive path of the lidar do not coincide. If the target object is far enough away from the lidar, the transmit path and the receive path of the lidar may be two approximately parallel paths. In this case, a light spot dispersion degree and a light spot shift degree of imaging on the pixel array are very low, and may even be ignored. If the target object is close to the lidar, the transmit path and the receive path of the lidar are two non-parallel paths, resulting in a large dispersion and a large shift of the light spot on the pixel array. However, an error is introduced when the target parameter is calculated based on an electrical signal corresponding to the dispersed and shifted light spot. Therefore, error compensation further needs to be performed on a calculation result.

In addition, factors such as thermal expansion and contraction of a component inside the lidar or component aging may cause deformation of a transmitter lens of the radar, and also cause a shift of the imaging position of the light spot on the pixel array. Because a receiving position and a response range of the pixel array are fixed, after the position at which the light spot is received on the pixel array shifts, some optical signal cannot be received by the pixel array. It may be learned that an error is introduced when the target parameter is calculated based on a position-shifted light spot. Therefore, error compensation further needs to be performed on a calculation result.

In some possible embodiments, error compensation may be performed on the foregoing calculation result based on a specific error compensation table, for example, a distance compensation table or an energy compensation table used for calculating reflectivity. A corresponding error compensation value is found in the error compensation table based on the echo signal parameter that is responded to by the pixel array. However, this is based on a premise that the light spot distribution remains unchanged. Generally, the light spot imaged on the pixel array is uneven. When the light spot imaged on the pixel array is unevenly distributed, the light spot distribution changes when the light spot position shifts or the light spot disperses. However, after the light spot distribution changes, error compensation performed based on the error compensation table corresponding to the foregoing light spot distribution is also inaccurate. The following provides descriptions by using specific embodiments.

Ranging is used as an example. A compensation process according to the foregoing method may be divided into two parts, which are specifically as follows:

(1) Compensation for an error caused by a change of a target object distance For example, a current actual target distance is 15 m. In this case, overall distribution of the light spot corresponding to the echo beam is uneven, and the light spot disperses and shifts. As a result, the light spot distribution changes, and a detected target distance is 14.8 m. It is assumed that a distance compensation table 1 is stored in the system, and the error in a current case can be accurately compensated for based on the distance compensation table 1. In this case, the distance compensation table 1 is searched for an error value corresponding to the signal strength of the current echo beam, that is, 0.2 m. In this way, an error of the detected target distance is corrected. However, when the target is detected for a second time, the actual target distance changes to 10 m. In this case, the light spot further disperses, causing the light spot distribution to change again. As a result, the detected target distance is 9.5 m. For the light spot distribution in this case, if the distance compensation table 1 for previous error compensation is still used, an error value that corresponds to the signal strength of the current echo beam and that is found in the distance compensation table 1 is usually inaccurate, for example, 0.4 m. If accurate compensation is required, a distance compensation table 2 for the current light spot distribution needs to be additionally stored, to ensure accuracy of error compensation.

(2) Compensation for an error caused by a change of a temperature of the lidar For example, a current temperature of the lidar is 10°C, and an actual target distance is 200 m. It is assumed that, in this case, the light spot position does not shift due to the target distance. However, in this case, the temperature of the lidar causes the light spot position to shift. Consequently, light spot distribution changes, and a detected target distance is 198 m. It is assumed that a distance compensation table 3 is stored in the system, and the error in the current case can be accurately compensated for based on the distance compensation table 3. The distance compensation table 3 is searched for an error value corresponding to the signal strength of the current echo beam, that is, 2 m. In this way, an error of the detected target distance is corrected.

However, when the target is detected for a second time, the actual target distance remains unchanged, but the temperature of the lidar changes to 25°C. Due to thermal expansion and thermal contraction, a transmitter lens or a receiver lens of the lidar shifts. In this case, the light spot position further shifts, causing the light spot distribution to change again. As a result, a detected target distance is 196 m. For the light spot distribution in this case, if the distance compensation table 3 for previous error compensation is still used, an error value that corresponds to the signal strength of the current echo beam and that is found in the distance compensation table 3 is usually inaccurate, for example, 3 m. If accurate compensation is required, a distance compensation table 4 for the current light spot distribution needs to be additionally stored, to ensure accuracy of error compensation. Otherwise, there may be a problem of insufficient compensation or excessive compensation.

When reflectivity detection is performed on the target object according to the foregoing method, the foregoing problems also occur.

It may be learned that, based on the cases mentioned in the foregoing descriptions, changes of the light spot distribution are diversified, and accurate compensation cannot be performed based on one error compensation table. Therefore, a large quantity of error compensation tables corresponding to different light spot distribution needs to be stored. This causes a waste of resources, and it is difficult to implement accurate error compensation during actual application.

In view of this, an embodiment of this application provides a detection method, to further split each pixel in a pixel array for receiving a light spot. Each pixel is split into a plurality of sub-pixels. Because the sub-pixel is very small, light spot distribution in a sub-pixel range is even or approximately even. Then, a compensation amount corresponding to the sub-pixel is determined based on an error compensation table determined through an experiment in advance. This ensures that a compensation amount corresponding to each sub-pixel is accurate. Then, a compensation amount of the entire pixel is determined based on the compensation amount corresponding to each sub-pixel. Because the compensation amount corresponding to each sub-pixel is accurate, the compensation amount of the entire pixel determined in this way is also accurate. In this way, error compensation is performed on a target parameter calculated by a lidar system, and accuracy of error compensation is also improved.

It should be understood that, when a geometric parameter of the light spot is less than or equal to one pixel, and the compensation amount that is of the pixel and that is obtained through calculation according to the foregoing method is accurate, a target parameter result subsequently obtained through calculation is also accurate. When a geometric parameter of the light spot is a plurality of pixels, because the compensation amount of each pixel obtained through calculation according to the foregoing method is accurate, weighted summation is performed based on the compensation amounts of the pixels, and a target parameter result is compensated based on a result of the weighted summation, so that a target parameter result subsequently obtained through calculation is also accurate.

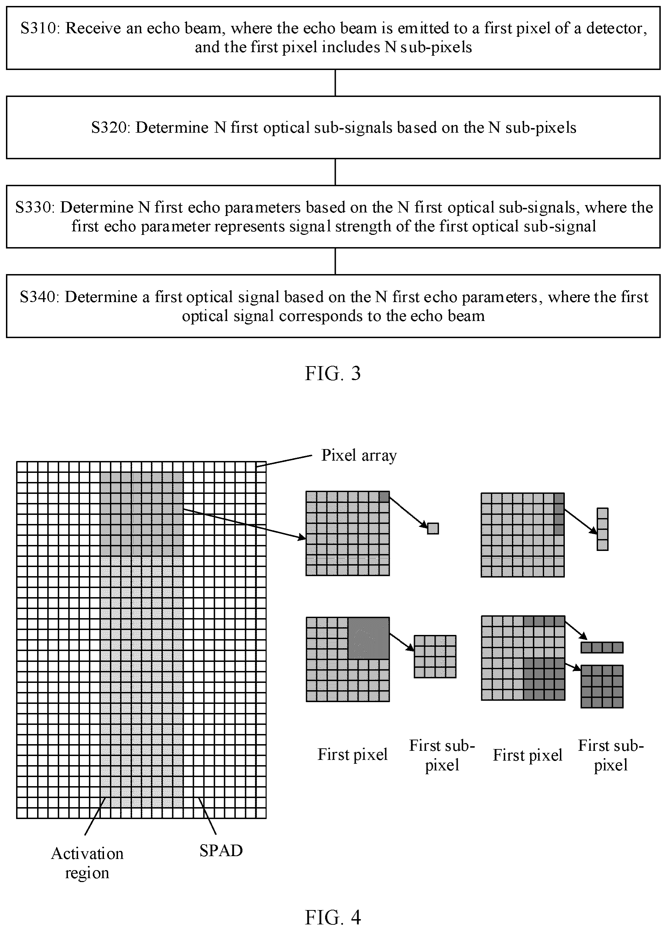

FIG. 3 is a schematic flowchart of a detection method according to an embodiment of this application.

The method is applied to a detector. Before the method is performed, a laser beam further needs to be emitted to a target object, and an echo beam (or referred to as an echo signal) formed by reflecting the laser beam by the target object is received.

S310: Receive the echo beam, where the echo beam is emitted to a first pixel of the detector, and the first pixel includes N sub-pixels.

In some possible embodiments, the echo beam may be emitted to a pixel array of the detector.

In some possible embodiments, the echo beam is finally presented in a form of light spot on the pixel array. Therefore, when the light spot occupies a plurality of pixels, an optical signal determined based on the echo beam corresponds to a part of the light spot. When the light spot occupies only the first pixel, an optical signal determined based on the echo beam corresponds to all of the light spot.

It should be understood that the first pixel may be divided into the N sub-pixels in advance, where N is a positive integer.

FIG. 4 is a diagram of pixel division according to an embodiment of this application.

In some possible embodiments, the first pixel is used as an example. The first pixel may be divided into the N sub-pixels with a same geometric parameter. A specific geometric parameter is not limited in embodiments of this application. In addition, the first pixel may alternatively be divided into the N sub-pixels with different geometric parameters, or the first pixel may be divided into a part of sub-pixels with a first geometric parameter, a part of sub-pixels with a second geometric parameter, and the like.

It should be understood that a larger quantity N of parts into which the first pixel is divided indicates a smaller area of the sub-pixel, so that a part of the light spot (also referred to as a sub-light spot) corresponding to each sub-pixel is approximately evenly distributed. In addition, in the foregoing pixel division process, the light spot is also divided, and a complete light spot is divided into several sub-light spots. In addition, it is ensured that each sub-light spot is evenly distributed in the pixel array. Therefore, for the sub-light spot that is evenly distributed and that corresponds to each sub-pixel, regardless of whether the light spot on the pixel array shifts and disperses, distribution of the sub-light spots corresponding to the sub-pixels remains unchanged, and is maintained as even distribution. Because the distribution of the sub-light spots remains unchanged, when geometric parameters of the sub-pixels are consistent, error compensation can be accurately performed, based on one error compensation table, on a target parameter that is obtained by solving an echo signal corresponding to the sub-light spot.

In some possible embodiments, in the pixel array, a manner of dividing each pixel in the pixel array may be adjusted in real time based on current light spot distribution, so that light spot distribution on each sub-pixel is even. Based on this technical solution, accuracy of subsequent error compensation can be further improved.

In some possible embodiments, the first pixel may be divided based on a SPAD in the pixel array. The SPAD includes a pixel activation region. Each pixel in the pixel activation region may be set in advance based on an initial parameter of the SPAD. The pixel is divided into a plurality of sub-pixels. The initial parameter includes a geometric parameter of each sub-pixel, for example, a length and a width of each pixel. Each sub-pixel is numbered. In addition, each pixel may also be numbered. In this way, some optical signals corresponding to each sub-pixel are distinguished.

For example, the first pixel is used as an example. A shape geometric parameter of the first pixel may be a square of 1*1 pixel, and related information of each sub-pixel may be described in the following manner.

```
Pixel    01:Son-Pixel    01={"Length":"0.5Pixel",
"Width":"0.5Pixel"};
Pixel    01:Son-Pixel    01={"Length":"0.5Pixel",
"Width":"0.5Pixel"};
Pixel    01:Son-Pixel    01={"Length":"0.5Pixel",
"Width":"0.5Pixel"};
```

Pixel 01:Son-Pixel 01={"Length":"0.5Pixel", "Width":"0.5Pixel"};

It may be learned that the first pixel is divided into four sub-pixels of a same shape, and a shape geometric parameter of each sub-pixel is a square of 0.5*0.5 pixels.

S320: Determine N first optical sub-signals based on the N sub-pixels.

S330: Determine N first echo parameters based on the N first optical sub-signals, where the first echo parameter represents signal strength of the first optical sub-signal.

In some possible embodiments, the first echo parameter includes at least one of the following: an echo area, an echo peak value, and an echo pulse width that are of the first optical sub-signal, and a rising edge slope of a curve image in a first sub-histogram.

In some possible embodiments, the first echo parameter may be determined based on a first sub-histogram corresponding to the first optical sub-signal.

S340: Determine a first optical signal based on the N first echo parameters, where the first optical signal corresponds to the echo beam.

It should be understood that the first optical signal is determined based on the first echo parameter corresponding to each first optical sub-signal, and a target parameter corresponding to the first optical signal is correspondingly compensated.

Based on the foregoing technical solution, the first pixel is divided into the N sub-pixels. Because the sub-pixel is very small, light spot distribution on the sub-pixel is even or approximately even. When a target object distance or reflectivity of a target object is detected, regardless of how factors such as the target object distance and a temperature of a laser change, the light spot distribution on the sub-pixel remains unchanged. Therefore, the method helps avoid a problem that an error cannot be accurately compensated based on one compensation table due to a change of light spot distribution. In other words, according to the method, on a premise that the geometric parameters of the N sub-pixels are the same, an accurate compensation amount can be obtained based on one compensation table. This improves accuracy of error compensation, and is easy to implement.

It should be understood that, when the light spot formed by the echo beam on the detector shifts, if a corresponding target parameter is directly calculated based on the optical signal determined based on the echo beam, and the target parameter is compensated, such compensation is usually inaccurate. This is because the light spot shift causes a change of the light spot distribution, and each type of light spot distribution corresponds to one compensation table. However, the change of the light spot distribution is often a dynamic process, and therefore compensation for the target parameter based on only one compensation table is inaccurate. Therefore, this embodiment of this application provides a solution of performing compensation based on the first optical sub-signal.

In some possible embodiments, after S340 is performed, a prerequisite is provided for determining a light spot parameter corresponding to the first pixel for accurate compensation. The detection method provided in this embodiment of this application may further include the following steps: Determine N first compensation sub-amounts based on the N first echo parameters, and determine a first compensation amount based on the N first compensation sub-amounts, where the first compensation amount is used to determine a compensation amount of the first optical signal.

In some possible embodiments, the first compensation sub-amount may be determined by searching a compensation table. The compensation table may be determined in advance through an experiment, and the compensation table records a mapping relationship between the first echo parameter and the first compensation sub-amount, for example, a mapping relationship between the echo area of the first optical sub-signal and the first compensation sub-amount, a mapping relationship between the echo pulse width of the first optical sub-signal and the first compensation sub-amount, or a mapping relationship between the echo peak value of the first optical sub-signal and the first compensation sub-amount. Then, weighted summation is performed on the N first compensation sub-amounts determined by searching the table, to determine the first compensation amount. Based on this technical solution, when the geometric parameters of the N sub-pixels are the same, the first compensation amount can be determined based on one compensation table. This improves accuracy of error compensation, and is easy to implement.

In some possible embodiments, for different compensation amounts, specific methods for determining the first compensation amount are different accordingly. For example, weighted accumulation may be performed on the N first compensation sub-amounts. The weighted accumulation may include two cases. In one case, a weight is 1. In this case, a weighted accumulation process is actually a direct accumulation process. In the other case, a weight is not 1. In addition, the N first compensation sub-amounts may alternatively be accumulated to obtain an average value.

Based on the foregoing technical solution, the N first echo parameters are determined based on the N first optical sub-signals received by the N sub-pixels, and the sub-pixel is very small. Therefore, even if the light spot corresponding to the echo beam shifts, for the N sub-pixels, when N is large enough, distribution of a part of the light spot on the sub-pixel is approximately even. Therefore, regardless of whether the light spot shifts, distribution of the part of the light spot corresponding to the N sub-pixels remains even, the N first compensation sub-amounts determined based on the N first echo parameters are accurate, and therefore the first compensation amount is accurate. This improves accuracy of error compensation.

In some possible embodiments, a first result value may be determined based on a second optical signal. The second optical signal is an original optical signal determined based on the echo beam, and the first result value may be the target object distance, or may be an energy value of the second optical signal used to calculate the reflectivity of the target object. However, the first result value is a result value that is not compensated. Therefore, the first compensation amount may be determined according to the method provided in the foregoing embodiments, and then the first result value is compensated based on the first compensation amount, to determine a first target parameter value. The first target parameter value corresponds to the first optical signal.

Based on the foregoing technical solution, accuracy of the first target parameter value is improved.

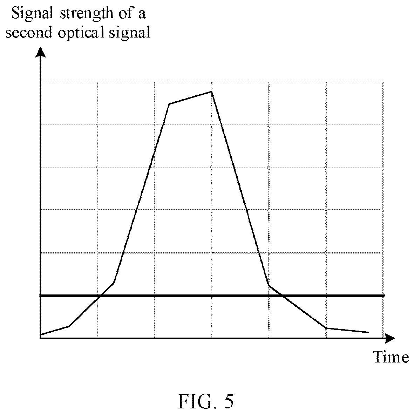

In some possible embodiments, the first result value may be determined based on a first histogram corresponding to the second optical signal. The first histogram includes a change trend of signal strength of the second optical signal responded to by the first pixel in a plurality of unit time periods. Further, an echo area, an echo pulse width, and an echo peak value that are of the second optical signal, and a rising edge slope of a curve image in the first histogram may be determined based on the first histogram. The first histogram is shown in FIG. 5 below.

FIG. 5 is a diagram of a first histogram according to an embodiment of this application. Horizontal coordinates of the first histogram are the plurality of unit time periods, and vertical coordinates of the first histogram are the signal strength of the second optical signal responded to by the first pixel in the plurality of unit time periods. Therefore, the first histogram intuitively presents the change trend of the signal strength of the second optical signal with time.

In some possible embodiments, the echo area is an integral value of the curve image in the first histogram, and the echo pulse width may be classified into a first pulse width and a second pulse width. The first pulse width is also referred to as a full pulse width, and is a difference between horizontal coordinates of a start point and an end point of the curve image in the first histogram. The second pulse width is a pulse width corresponding to a specific proportion threshold, namely, a pulse width that is of the curve image in the first histogram and that is extracted horizontally at a preset position. The preset position may be a proper position like a position of 1/2 (in this case, the second pulse width is also referred to as a full pulse width at half maximum) or 1/3 of the curve image. For example, when the preset position is the position of 1/2 of the curve image, it is assumed that a vertical coordinate of a peak point of the curve image is y. In this case, vertical coordinates of two end points of the full pulse width at half maximum are y/2, a difference between horizontal coordinates of the two end points is the full pulse width at half maximum, and the echo peak value is the vertical coordinate of the peak point of the curve image in the first histogram. The signal strength of the second optical signal may be represented based on any one of the echo area, the echo pulse width, and the echo peak value that are of the second optical signal.

In some possible embodiments, to more accurately determine the signal strength of the second optical signal, a background light value of a current environment further needs to be determined, and an error of the background light value relative to the signal strength of the second optical signal needs to be eliminated. Based on this technical solution, accuracy of error compensation can be further improved.

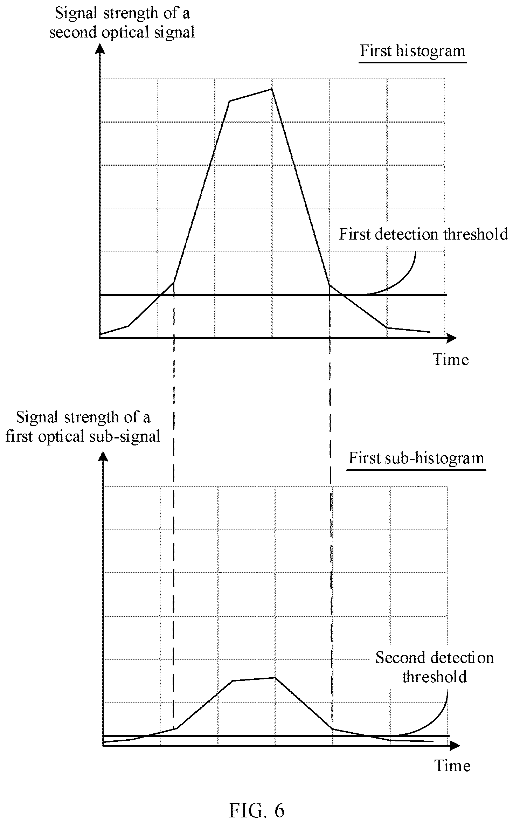

In some possible embodiments, the first echo parameter may be determined based on the first sub-histogram corresponding to the first optical sub-signal. According to a method similar to the method for determining the first histogram in the foregoing embodiment, the first sub-histogram may be determined based on the first optical sub-signal. The first sub-histogram includes a change trend of the signal strength of the first optical sub-signal responded to by the sub-pixel in the plurality of unit time periods. Further, the echo area, the echo pulse width, and the echo peak value that are of the first optical sub-signal, and the rising edge slope of the curve image in the corresponding first sub-histogram may also be determined based on the first sub-histogram, and these parameters all belong to the first echo parameter. The first sub-histogram is shown in FIG. 6.

FIG. 6 is a diagram of a first sub-histogram according to an embodiment of this application. Meanings of a horizontal coordinate and a vertical coordinate of the first sub-histogram are the same as meanings of the horizontal coordinate and the vertical coordinate of the first histogram. Similarly, the first sub-histogram represents the change trend of the signal strength of the first optical sub-signal with time.

It may be learned from FIG. 6 that, because the first optical sub-signal is a part of the second optical signal, a curve trend of the first sub-histogram is basically consistent with a curve trend of the first histogram. Therefore, the first echo parameter may alternatively be determined based on the first sub-histogram, and the first echo parameter includes at least one of the echo area, the echo pulse width, and the echo peak value that are of the first optical sub-signal. Meanings of the echo area, the echo pulse width, the echo peak value, and the like are described in the foregoing corresponding embodiment, and details are not described herein again.

Based on the foregoing technical solution, the first echo parameter representing the signal strength of the first optical sub-signal is calculated based on the first sub-histogram. The method is easy to implement and has high flexibility. Any parameter in the echo area, the echo pulse width, and the echo peak value can represent the signal strength of the first optical sub-signal.

In some possible embodiments, the first histogram may be extracted based on a first detection threshold, so that the first result value is calculated based on a part of an image above the first detection threshold. The first detection threshold is a proper preset value.

Correspondingly, because the first sub-histogram is obtained by scaling down the first histogram in corresponding proportion, the first sub-histogram may alternatively correspond to a second detection threshold, and the second detection threshold is obtained by scaling down the first detection threshold in proportion. Alternatively, a start moment and an end moment of the first histogram may be determined based on the first histogram and the first detection threshold, and the start moment and the end moment also correspond to a start moment and an end moment of the first sub-histogram. Therefore, the first sub-histogram can be extracted without determining the second detection threshold.

Based on the foregoing technical solution, only a part of histogram data greater than the detection threshold may be analyzed. In addition, on a premise that the threshold is set properly, accuracy of histogram analysis is not affected. This helps improve efficiency of histogram analysis.

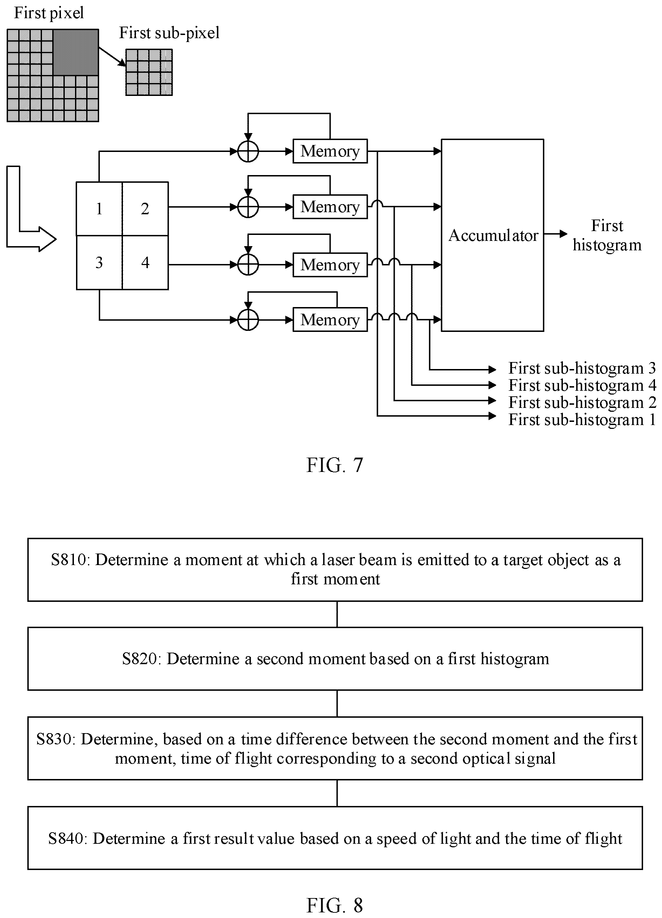

In some possible embodiments, the corresponding first histogram may be further determined based on the N first sub-histograms. FIG. 7 is a diagram of a method for determining a first histogram according to an embodiment of this application.

The first pixel is used as an example. The first pixel is divided into four sub-pixels with a same shape geometric parameter. Correspondingly, each sub-pixel receives a first optical sub-signal, and then detects the four first optical sub-signals respectively, to determine four first sub-histograms: a first sub-histogram 1, a first sub-histogram 2, a first sub-histogram 3, and a first sub-histogram 4. A memory is configured to store a parameter required for generating the first sub-histogram and store data of the determined first sub-histogram. Then, the plurality of first sub-histograms are accumulated through an accumulator, to determine the first histogram.

In some possible embodiments, a process of determining the first sub-histogram may be completed in the detector, or may be completed in a signal processing module. This is not limited in embodiments of this application.

For ease of understanding, the following describes in detail a detection method provided in an embodiment of this application.

For example, the first result value is the target object distance. The first result value may be determined in the following manner.

FIG. 8 is a schematic flowchart of a method for determining a first result value according to an embodiment of this application.

S810: Determine a moment at which a laser beam is emitted to a target object as a first moment.

S820: Determine a second moment based on the first histogram.

In some possible embodiments, a start moment at which a second optical signal (namely, an echo signal) is detected may be used as the second moment based on the first histogram, or a peak moment of the first histogram may be directly used as the second moment, or the second moment may be determined through CFD based on the first histogram, or the second moment may be determined based on the first histogram and the following Formula (1) according to a centroid algorithm. Formula (1) is used to calculate echo time corresponding to the second optical signal. Formula (1) is specifically as follows:

$$t = \frac{\sum\limits_{bin=a}^{b} A(bin) \times bin}{\sum\limits_{bin=a}^{b} A(bin)} \qquad (1)$$

Herein, *t* represents the echo time, *a* represents a start position of the first histogram, *b* represents an end position of the first histogram, *bin* represents a horizontal coordinate of each point in the first histogram, and *A(bin)* represents a vertical coordinate of each point in the first histogram.

S830: Determine, based on a time difference between the second moment and the first moment, time of flight corresponding to the second optical signal.

S840: Determine the first result value based on a speed of light and the time of flight.

In some possible embodiments, the speed of light and the time of flight are multiplied, and a product is divided by 2, to obtain a target object distance, namely, the first result value. However, in a process in which the target object distance changes, signal strength of the second optical signal also changes, and a corresponding light spot shifts and/or disperses accordingly. It may be learned that the first result value is inaccurate. Therefore, after the first result value is determined, a first compensation amount needs to be determined based on a first optical sub-signal corresponding to each sub-pixel. A first echo parameter of the first optical sub-signal includes an echo area of the first optical sub-signal. The first compensation amount may be determined according to the following method:

In some possible embodiments, a first compensation table may be searched based on echo areas of N first optical sub-signals, to determine N first compensation sub-amounts corresponding to the echo areas of the N first optical sub-signals. The N first compensation sub-amounts are distance compensation amounts obtained through calculation based on the N first optical sub-signals. It may be learned from the corresponding description in the foregoing embodiment that the first compensation table may be a table that is determined in advance through an experiment and that is used to record a mapping relationship between echo areas of different first optical sub-signals and the first compensation sub-amounts. Then, weighted accumulation is performed on the N first compensation sub-amounts, to determine the first compensation amount.

For example, the first result value is an energy value of the second optical signal. The first result value may be determined in the following manner.

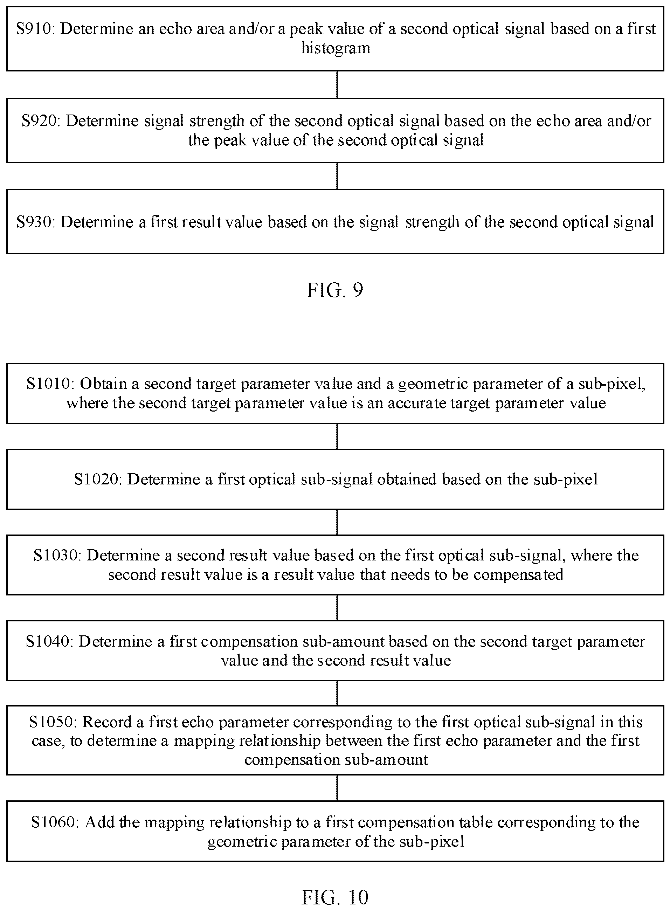

FIG. 9 is a schematic flowchart of another method for determining a first result value according to an embodiment of this application.

S910: Determine an echo area and/or a peak value of a second optical signal based on a first histogram.

S920: Determine signal strength of the second optical signal based on the echo area and/or the peak value of the second optical signal.

S930: Determine the first result value based on the signal strength of the second optical signal.

In some possible embodiments, when a transmitter lens of a radar is deformed, or a target object distance changes, a corresponding light spot shifts and/or disperses accordingly. It may be learned that the first result value is inaccurate. Therefore, after the first result value is determined, the first compensation amount needs to be determined based on a first optical sub-signal corresponding to each sub-pixel. A first echo parameter of the first optical sub-signal includes an echo area of the first optical sub-signal. The first compensation amount may be determined according to the following method:

In some possible embodiments, a first compensation table may be searched based on echo areas of N first optical sub-signals, to determine N first compensation sub-amounts corresponding to the echo areas of the N first optical sub-signals. The N first compensation sub-amounts are energy compensation amounts obtained through calculation based on the N first optical sub-signals. It may be learned from the corresponding description in the foregoing embodiment that the first compensation table may be a table that is determined in advance through an experiment and that is used to record a mapping relationship between echo areas of different first optical sub-signals and the first compensation sub-amounts. Then, the first compensation amount is determined based on the N first compensation sub-amounts.

It may be learned that, during actual application, if the first compensation sub-amount corresponding to the first echo parameter of the first optical sub-signal needs to be determined, the table that records the mapping relationship between the first echo parameter and the first compensation sub-amount and that is mentioned in the foregoing embodiment needs to be predetermined. In this embodiment of this application, the table is defined as a first compensation table.

FIG. 10 is a schematic flowchart of a method for determining a first compensation table according to an embodiment of this application.

In some possible embodiments, the first compensation table may be determined in the following experiment manner:

S1010: Obtain a second target parameter value and a geometric parameter of a sub-pixel, where the second target parameter value is an accurate target parameter value.

In some possible embodiments, when the second target parameter value is a target object distance, the target object distance is an accurate distance value measured in advance. When the second target parameter value is an energy value of a second optical signal reflected by a target object, the energy value is an accurate energy value measured in advance.

In some possible embodiments, the geometric parameter of the sub-pixel is determined in a process of determining the manner of dividing the first pixel. The geometric parameter of the sub-pixel may be stored in a memory.

In some possible embodiments, the geometric parameter of the sub-pixel includes a shape and/or an area of the sub-pixel.

In some possible embodiments, for sub-pixels with different geometric parameters, different first compensation tables need to be correspondingly determined.

S 1020: Determine the first optical sub-signal obtained based on the sub-pixel.

It should be understood that the first optical sub-signal is a part of the second optical signal reflected by the target object after a laser beam is emitted to the target object.

S 1030: Determine a second result value based on the first optical sub-signal, where the second result value is a result value that needs to be compensated.

It should be understood that, when the second result value is a target object distance that has not been compensated, it may be learned from the description of the foregoing corresponding embodiments that the second result value may be obtained through calculation based on time of flight of the first optical sub-signal. When the second result value is an energy value of the first optical sub-signal that has not been compensated, it may be learned from the description of the foregoing corresponding embodiments that the second result value may be obtained through calculation based on the signal strength of the first optical sub-signal.

S1040: Determine a first compensation sub-amount based on the second target parameter value and the second result value.

In some possible embodiments, when the first compensation sub-amount is a distance compensation sub-amount, the distance compensation sub-amount may be determined by calculating a difference between the second target parameter value and the second result value. When the first compensation sub-amount is an energy compensation sub-amount of the first optical sub-signal, the energy compensation sub-amount may be estimated based on the second target parameter value and the second result value.

S1050: Record a first echo parameter corresponding to the first optical sub-signal in this case, to determine a mapping relationship between the first echo parameter and the first compensation sub-amount.

S1060: Add the mapping relationship to the first compensation table corresponding to the geometric parameter of the sub-pixel.

In some possible embodiments, the second target parameter value is modified, an experiment in the foregoing method is repeated, and a plurality of determined mapping relationships are added to the first compensation table, to continuously expand the first compensation table, so that the first compensation table is continuously improved.

Based on the foregoing technical solution, corresponding first compensation tables are determined for sub-pixels with different geometric parameters according to a pre-experiment method. In this way, when the first pixel is divided into a plurality of sub-pixels with a same geometric parameter, the distance compensation amount can be accurately compensated based on the first compensation table determined through the foregoing experiment. Even if the first pixel is divided into a plurality of sub-pixels with geometric parameters which are not completely the same, for example, two types of geometric parameters, only two first compensation tables are required to accurately compensate for the distance compensation amount. This resolves a problem of difficulty in accurately performing error compensation in the conventional technology.

In some possible embodiments, after the first compensation table is determined, when the first result value is the target object distance, and correspondingly, the first compensation amount is the distance compensation amount, the first compensation sub-amount may be searched for in the following manner, and a compensated first result value is determined.

First, the geometric parameter of the sub-pixel is determined, to select a corresponding first compensation table.

Then, the first echo parameter collected by the sub-pixel is determined.

Then, the first compensation table is searched for a corresponding first compensation sub-amount based on the first echo parameter.

Finally, the first compensation amount is determined based on a plurality of first compensation sub-amounts, and a compensated target object distance is obtained through calculation based on the first result value and the first compensation amount.

In some possible embodiments, when the first compensation amount is the distance compensation amount, the first compensation amount may be determined according to the following Formula (2):

$$\Delta x = \frac{\sum\limits_{n=1}^{n=N} area_n \times \Delta x_n}{\sum\limits_{n=1}^{n=N} area_n} \qquad (2)$$

Herein, $\Delta x$ represents the first compensation amount, and in this embodiment, the first compensation amount is the distance compensation amount; N represents a quantity of sub-pixels into which the first pixel is divided, and corresponds to N first sub-histograms; $area_n$ represents an echo area of an $n^{th}$ first sub-histogram in the N first sub-histograms; and $\Delta x_n$ represents a first compensation sub-amount that corresponds to the echo area of the $n^{th}$ first sub-histogram in the N first sub-histograms and that is obtained by searching the first compensation table. In this embodiment, the first compensation sub-amount is also referred to as a distance compensation sub-amount.

In some possible embodiments, the echo area of the echo signal may be determined according to the following Formula (3):

$$area = \sum\limits_{bin=a}^{b} A(bin) \times \Delta t \qquad (3)$$

Herein, $area$ is the echo area of the echo signal, and $\Delta t$ is duration of a unit time period in which the first pixel responds to the echo signal. The echo signal may be the second optical signal, or may be the first optical sub-signal.

In some possible embodiments, the target object distance is determined based on a speed of light and time of flight corresponding to the second optical signal. Therefore, the distance compensation amount may alternatively be a delay compensation amount. Correspondingly, the distance compensation sub-amount may alternatively be a delay compensation sub-amount. After the delay compensation amount is determined, the distance compensation amount may be determined by multiplying the delay compensation amount by the speed of light.

In some possible embodiments, the distance compensation amount may be calculated based on echo areas of N first optical sub-signals. Specifically, the foregoing Formulas (1) to (3) are used. In addition, the distance compensation amount may alternatively be calculated based on echo peak values, echo pulse widths, or the like of the N first optical sub-signals. Although a specifically used formula may be different from the foregoing Formulas (1) to (3), principles are the same. Details are not described herein again.

In some possible embodiments, after the first compensation table is determined, when the first result value is the energy value of the second optical signal, and correspondingly, the first compensation amount is the energy compensation amount, the first compensation sub-amount may be searched for in the following manner, and a compensated first result value is determined.

First, a target object distance is determined.

In some possible embodiments, the target object distance may be a target object distance obtained after compensation is performed according to the corresponding method provided in the foregoing embodiment.

Then, the geometric parameter of the sub-pixel is determined, to select a corresponding first compensation table.

Then, the first echo parameter collected by the sub-pixel is determined.

Then, the first compensation table is searched for a corresponding first compensation sub-amount based on the first echo parameter.

Finally, the first compensation amount is determined based on a plurality of first compensation sub-amounts. Because the first result value and the first compensation amount are energy values, when the first result value and the first compensation amount are determined, compensated reflectivity of the target object further needs to be obtained through calculation with reference to the target object distance.

In some possible embodiments, a mapping relationship between the echo area of the first optical sub-signal and the distance compensation amount and a mapping relationship between the echo area of the first optical sub-signal and the energy compensation amount may be recorded in different compensation tables, or may be recorded in one compensation table, for example, recorded in the first compensation table. This is not limited in embodiments of this application.

When the first compensation amount is the energy compensation amount, the first compensation amount may be determined according to the following Formula (4):

$$peakest = \sum_{n=1}^{n=N} peakest_n \qquad (4)$$

Herein, $peakest_n$ represents a first compensation sub-amount corresponding to an echo area of an $n^{th}$ first sub-histogram obtained by searching the first compensation table, and in this embodiment, the first compensation sub-amount is also referred to as an energy compensation sub-amount; and $peakest$ represents the first compensation amount, and in this embodiment, the first compensation amount is also referred to as an energy compensation amount.

In some possible embodiments, the first compensation table may further include a mapping relationship between echo pulse widths or echo peak values of different first optical sub-signals and the first compensation sub-amounts. The echo pulse width or the echo peak value of the first optical sub-signal belongs to the first echo parameter. Based on this, the first compensation table may be further searched based on the echo pulse width or the echo peak value of the first optical sub-signal, to determine the first compensation sub-amount. An experiment method for determining the mapping relationship between the first compensation sub-amounts and the echo pulse width or the echo peak value of the different first optical sub-signals is the same as the experiment method in the foregoing corresponding embodiment, and details are not described herein again.

Based on the foregoing technical solution, when the first pixel is divided into a plurality of sub-pixels with a same geometric parameter, the distance compensation amount can be accurately compensated based on the first compensation table determined through the foregoing experiment. Even if the first pixel is divided into a plurality of sub-pixels with geometric parameters which are not completely the same, for example, two types of geometric parameters, only two first compensation tables are required to accurately compensate for the distance compensation amount. This resolves a problem of difficulty in accurately performing error compensation in the conventional technology.

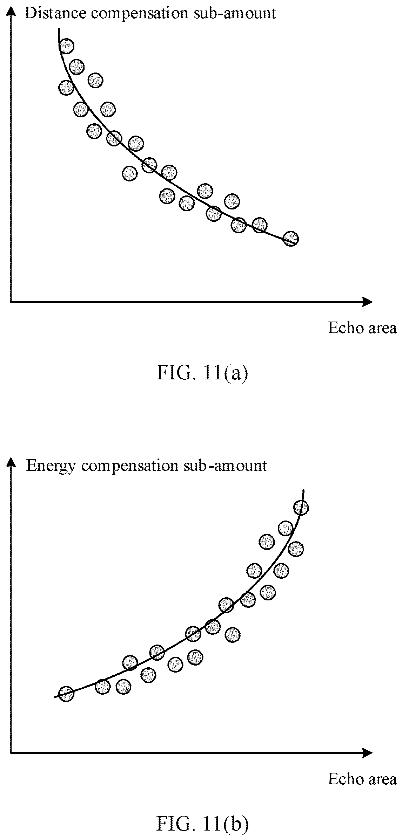

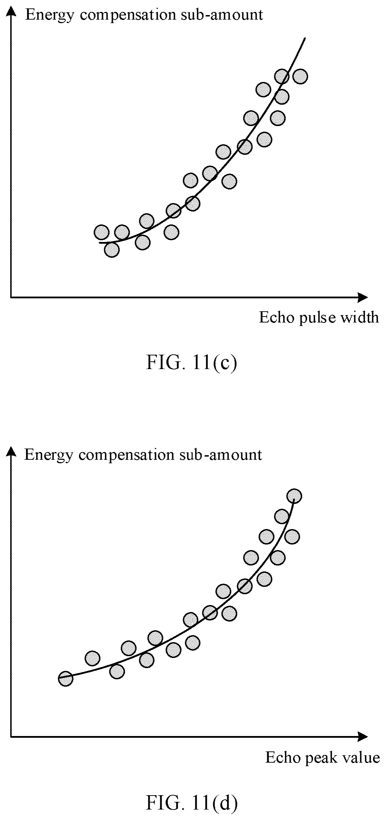

FIG. 11(a) to FIG. 11(d) are diagrams of a relationship between a first compensation sub-amount determined through an experiment and a first echo parameter according to an embodiment of this application. FIG. 11(a) is a diagram of a relationship between a distance compensation sub-amount and an echo area that correspond to a first optical sub-signal, FIG. 11(b) is a diagram of a relationship between an energy compensation sub-amount and the echo area that correspond to the first optical sub-signal, FIG. 11(c) is a diagram of a relationship between an energy compensation sub-amount and an echo pulse width that correspond to the first optical sub-signal, and FIG. 11(d) is a diagram of a relationship between an energy compensation sub-amount and an echo peak value that correspond to the first optical sub-signal.

In some possible embodiments, the foregoing operation of determining the first compensation sub-amount by searching the first compensation table is complex, and resource overheads are high. It may be learned from FIG. 11(a) to FIG. 11(d) that there is a linear trend of the relationship between the first echo parameter and the first compensation sub-amount. Therefore, the mapping relationship recorded in the first compensation table may be fitted in a linear regression manner, to determine a first function. When the first echo parameter of the first optical sub-signal is determined, the first echo parameter is input to the first function, to determine the first compensation sub-amount.

Based on the foregoing technical solution, efficiency of determining the first compensation sub-amount can be further improved, and problems of low table searching operation efficiency and high resource overheads can be effectively avoided.

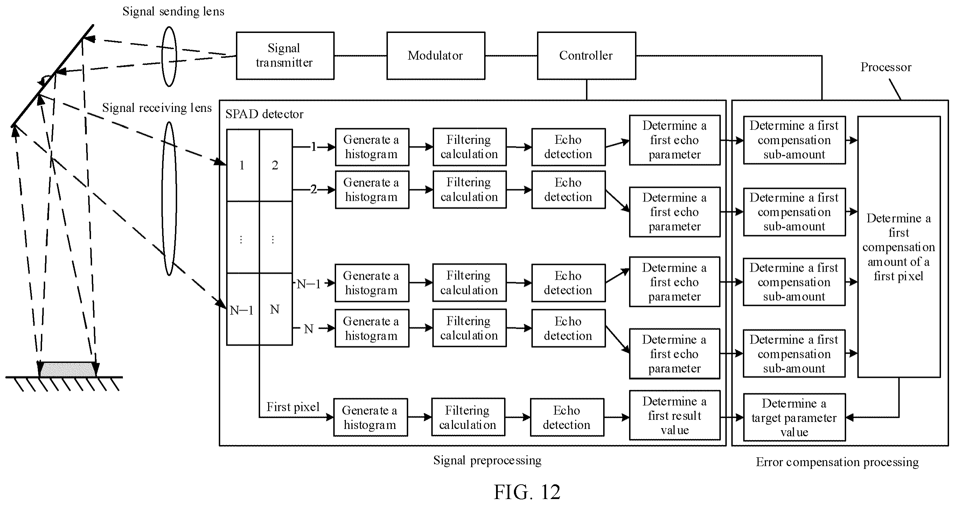

FIG. 12 is a diagram of a detection system according to an embodiment of this application. The system includes a controller, a modulator, a signal transmitter, a signal detector, and a signal processor.

Functions of the controller and the modulator are the same as functions of the controller and the modulator in the embodiment corresponding to FIG. 1. For details, refer to corresponding content in the foregoing embodiment. Details are not described herein again.

In addition to a laser and an emitting optical lens, the signal transmitter further includes a scanning mirror. The scanning mirror is configured to: reflect a laser beam emitted by the laser, and scan the laser beam onto a target object, so that an echo beam reflected by the target object can include overall related information of the target object, for example, a light spot imaged on a pixel array by the echo beam. According to the detection method provided in the foregoing embodiment, a target parameter value like reflectivity of the target object may be determined.

The signal detector includes a pixel array, and each pixel in the pixel array is divided into a plurality of sub-pixels based on a SPAD. For example, a first pixel may be divided into N sub-pixels.

In addition, the signal detector may perform signal preprocessing on an optical signal received by the pixel array. The first pixel is used as an example. After receiving the echo beam, the first pixel determines a second optical signal, and then may generate a first histogram based on the second optical signal, perform filtering processing on the first histogram through a finite impulse response (finite impulse response, FIR) filter, and perform echo detection on the second optical signal, to obtain a first result value. For the N sub-pixels, N first sub-histograms may be correspondingly generated based on N first optical sub-signals received by the N sub-pixels in total, and corresponding filtering processing is performed on the N first sub-histograms. In addition, echo detection is separately performed on the N first optical sub-signals, to obtain N first echo parameters.

The signal processor may be configured to determine N first compensation sub-amounts based on a first compensation table and the first echo parameters respectively corresponding to the N sub-pixels. Alternatively, the N first echo parameters are separately input to a first function, to determine N first compensation sub-amounts. In addition, operations such as weighted accumulation are performed on the N first compensation sub-amounts, to determine a first compensation amount corresponding to the entire first pixel. Then, error compensation is performed on a first to-be-compensated amount based on the first compensation amount, to determine a target result value.

In some possible embodiments, the signal detector and the signal processor may alternatively be integrated into one device. This is not limited in embodiments of this application.

Based on the foregoing technical solution, the first pixel is divided into the N sub-pixels. Because the sub-pixel is very small, light spot distribution on the sub-pixel is even or approximately even. When a target object distance or reflectivity of the target object is detected, regardless of how factors such as the target object distance, a temperature of the laser, and a temperature of the detector change, the light spot distribution on the sub-pixel remains unchanged. In this way, a problem that an error cannot be accurately compensated based on one compensation table due to a change of the light spot distribution can be effectively avoided. According to the method, when geometric parameters of the N sub-pixels are the same, the first compensation amount can be determined based on one compensation table. This improves accuracy of error compensation, and is easy to implement.

In some possible embodiments, to prevent a jitter of the optical signal from affecting target object detection, in a process of detecting the target object, laser beams may be emitted to the target object a plurality of times, and echo detection is performed a plurality of times based on reflected echo beams. In this way, a plurality of groups of first echo parameters are obtained. Then, the plurality of groups of first echo parameters are accumulated to determine a group of second echo parameters, and then a detection parameter of the target object may be obtained through calculation based on the second echo parameters.

In some possible embodiments, to prevent a jitter of the optical signal from affecting target object detection, in a process of detecting the target object, laser beams may be emitted to the target object a plurality of times, and a plurality of first histograms are determined a plurality of times based on reflected echo beams. Then, the plurality of first histograms are superimposed to determine a second histogram, and then a corresponding parameter may be determined based on the second histogram, to obtain a detection parameter of the target object through calculation. Similarly, the first sub-histograms may also be superimposed, to process a plurality of determined first sub-histograms.

Based on the foregoing technical solution, accuracy of detecting the target object is further improved.

In addition, an embodiment of this application further provides an apparatus configured to implement any one of the foregoing methods. For example, a detection apparatus is provided. The apparatus includes units (or means) configured to implement any one of the foregoing detection methods.

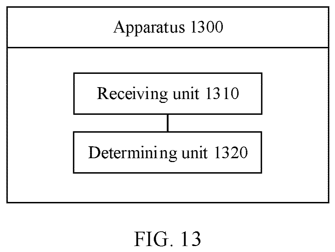

FIG. 13 is a block diagram of a detection apparatus 1300 according to an embodiment of this application. As shown in FIG. 13, the apparatus 1300 includes:

> a receiving unit 1310, configured to receive an echo beam, where the echo beam is emitted to a first pixel of a detector, and the first pixel includes N sub-pixels; and
> a determining unit 1320, configured to: determine N first optical sub-signals based on the N sub-pixels, where N is a positive integer; determine N first echo parameters based on the N first optical sub-signals, where the first echo parameter represents signal strength of the first optical sub-signal; and determine a first optical signal based on the N first echo parameters, where the first optical signal corresponds to the echo beam.

In some possible embodiments, the determining unit 1320 is specifically configured to: determine a first sub-histogram based on the first optical sub-signal, where the first sub-histogram includes a change trend of the signal strength of the first optical sub-signal in a plurality of unit time periods; and determine the first echo parameter based on the first sub-histogram.

In some possible embodiments, the determining unit 1320 is specifically configured to: determine N first compensation sub-amounts based on the N first echo parameters; and determine a first compensation amount based on the N first compensation sub-amounts, where the first compensation amount is used to determine a compensation amount of the first optical signal.

In some possible embodiments, the determining unit 1320 is specifically configured to: obtain, based on a geometric parameter of the sub-pixel, a corresponding first compensation table through screening; and search the first compensation table based on the first echo parameter to determine a first compensation sub-amount corresponding to the first echo parameter, where the first compensation table is determined in advance through an experiment, and the first compensation table includes a mapping relationship between the first echo parameter and the first compensation sub-amount.

In some possible embodiments, the geometric parameter of the sub-pixel includes a shape and/or an area of the sub-pixel.

In some possible embodiments, the first echo parameter includes at least one of the following: an echo area, an echo peak value, and an echo pulse width that are of the first optical sub-signal, and a rising edge slope of a curve image in the first sub-histogram.

In some possible embodiments, the determining unit 1320 is further configured to: determine a first result value based on a second optical signal, where the second optical signal is an original optical signal determined based on the echo beam; and compensate the first result value based on the first compensation amount, to determine a first target parameter value, where the first target parameter value corresponds to the foregoing first optical signal.

In some possible embodiments, the determining unit 1320 is specifically configured to: determine a first histogram based on the second optical signal, where the first histogram includes a change trend of signal strength of the second optical signal in a plurality of unit time periods; and determine the first result value based on the first histogram.

In some possible embodiments, when the first result value is a distance from a target object, the determining unit 1320 is specifically configured to: \determine a moment at which a laser beam is emitted to the target object as a first moment; determine a second moment based on the first histogram; determine, based on a time difference between the second moment and the first moment, time of flight corresponding to the second optical signal; and determine the first result value based on a speed of light and the time of flight.

In some possible embodiments, the determining unit 1320 is specifically configured to: determine, based on the first histogram, a start moment at which the second optical signal is detected as the second moment; or use a peak moment of the first histogram as the second moment based on the first histogram; or determine the second moment based on the first histogram through constant fraction timing CFD; or determine, based on the first histogram, echo time corresponding to the second optical signal, and then determine, according to a centroid algorithm, the second moment based on the echo time of the second optical signal.

In some possible embodiments, when the first result value is an energy value of the second optical signal, the determining unit 1320 is specifically configured to: determine an echo area and/or an echo peak value of the second optical signal based on the first histogram; determine the signal strength of the second optical signal based on the echo area and/or the echo peak value of the second optical signal; and determine the first result value based on the signal strength of the second optical signal.

In some possible embodiments, before the determining unit determines the first compensation amount based on the N first echo parameters, the determining unit 1320 is further configured to: determine the first compensation table, including: obtain a second target parameter value and the geometric parameter of the sub-pixel, where the second target parameter value is an accurate target parameter value; determine the first optical sub-signal obtained based on the sub-pixel; determine a second result value based on the first echo parameter corresponding to the first optical sub-signal, where the second result value is a result value that needs to be compensated; determine the first compensation sub-amount based on the second result value and the second target parameter value; record the first echo parameter corresponding to the first optical sub-signal, to determine the mapping relationship between the first echo parameter and the first compensation sub-amount; and add the mapping relationship to the first compensation table corresponding to the geometric parameter of the sub-pixel.

In some possible embodiments, the N sub-pixels are obtained through division based on a single-photon avalanche diode SPAD in a pixel array.

In some possible embodiments, the echo beam is emitted to the pixel array to form a light spot, and a part of the light spot on each sub-pixel is evenly distributed.

In addition, an embodiment of this application further provides a vehicle. The vehicle includes the foregoing apparatus 1300.

A person of ordinary skill in the art may be aware that, in combination with the examples described in embodiments disclosed in this specification, units and algorithm steps may be implemented by electronic hardware or a combination of computer software and electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The software product is stored in a storage medium, and includes several instructions for indicating a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A detection method, applied to a detector, wherein the method comprises:

    receiving an echo beam, wherein the echo beam is emitted to a first pixel of the detector, and the first pixel comprises N sub-pixels;
    determining N first optical sub-signals based on the N sub-pixels, wherein N is a positive integer;
    determining N first echo parameters based on the N first optical sub-signals, wherein the first echo parameter represents signal strength of the first optical sub-signal; and
    determining a first optical signal based on the N first echo parameters, wherein the first optical signal corresponds to the echo beam.

2. The method according to claim 1, wherein the determining N first echo parameters based on the N first optical sub-signals comprises:

    determining a first sub-histogram based on the first optical sub-signal, wherein the first sub-histogram comprises a change trend of the signal strength of the first optical sub-signal in a plurality of unit time periods; and
    determining the first echo parameter based on the first sub-histogram.

3. The method according to claim 1 or 2, wherein the determining a first optical signal based on the N first echo parameters comprises:

    determining N first compensation sub-amounts based on the N first echo parameters; and
    determining a first compensation amount based on the N first compensation sub-amounts, wherein the first compensation amount is used to determine a compensation amount of the first optical signal.

4. The method according to claim 3, wherein the determining N first compensation sub-amounts based on the N first echo parameters comprises:

obtaining, based on a geometric parameter of the sub-pixel, a corresponding first compensation table through screening; and searching the first compensation table based on the first echo parameter to determine a first compensation sub-amount corresponding to the first echo parameter, wherein the first compensation table is determined in advance through an experiment, and the first compensation table comprises a mapping relationship between the first echo parameter and the first compensation sub-amount.

5. The method according to claim 4, wherein the geometric parameter of the sub-pixel comprises a shape and/or an area of the sub-pixel.

6. The method according to any one of claims 1 to 5, wherein the first echo parameter comprises at least one of the following: an echo area, an echo peak value, and an echo pulse width that are of the first optical sub-signal, and a rising edge slope of a curve image in the first sub-histogram.

7. The method according to any one of claims 1 to 6, wherein the method further comprises:

determining a first result value based on a second optical signal, wherein the second optical signal is an original optical signal determined based on the echo beam; and compensating the first result value based on the first compensation amount, to determine a first target parameter value, wherein the first target parameter value corresponds to the first optical signal.

8. The method according to claim 7, wherein the determining a first result value based on a second optical signal comprises:

determining a first histogram based on the second optical signal, wherein the first histogram comprises a change trend of signal strength of the second optical signal in a plurality of unit time periods; and determining the first result value based on the first histogram.

9. The method according to claim 8, wherein when the first result value is a distance from the target object, the determining the first result value based on the first histogram comprises:

determining a moment at which a laser beam is emitted to the target object as a first moment; determining a second moment based on the first histogram; determining, based on a time difference between the second moment and the first moment, time of flight corresponding to the second optical signal; and determining the first result value based on a speed of light and the time of flight.

10. The method according to claim 9, wherein the determining a second moment based on the first histogram comprises:

determining, based on the first histogram, a start moment at which the second optical signal is detected as the second moment; or using a peak moment of the first histogram as the second moment based on the first histogram; or determining the second moment based on the first histogram through constant fraction timing CFD; or determining, based on the first histogram, echo time corresponding to the second optical signal, and then determining, according to a centroid algorithm, the second moment based on the echo time corresponding to the second optical signal.

11. The method according to claim 8, wherein when the first result value is an energy value of the second optical signal, the determining the first result value based on the first histogram comprises:

determining an echo area and/or an echo peak value of the second optical signal based on the first histogram; determining the signal strength of the second optical signal based on the echo area and/or the echo peak value of the second optical signal; and determining the first result value based on the signal strength of the second optical signal.

12. The method according to any one of claims 1 to 11, wherein before the determining a first compensation amount based on the N first echo parameters, the method further comprises:
determining the first compensation table, comprising:

obtaining a second target parameter value and the geometric parameter of the sub-pixel, wherein the second target parameter value is an accurate target parameter value;

determining the first optical sub-signal obtained based on the sub-pixel;

determining a second result value based on the first echo parameter corresponding to the first optical sub-signal, wherein the second result value is a result value that needs to be compensated;

determining the first compensation sub-amount based on the second result value and the second target parameter value;

recording the first echo parameter corresponding to the first optical sub-signal, to determine the mapping relationship between the first echo parameter and the first compensation sub-amount; and

adding the mapping relationship to the first compensation table corresponding to the geometric parameter of the sub-pixel.

13. The method according to any one of claims 1 to 12, wherein the N sub-pixels are obtained through division based on a single-photon avalanche diode SPAD in a pixel array.

14. The method according to any one of claims 1 to 13, wherein the echo beam is emitted to the pixel array to form a light spot, and a part of the light spot on each sub-pixel is evenly distributed.

15. A detection apparatus, used in a detector, wherein the apparatus comprises:

a receiving unit, configured to receive an echo beam, wherein the echo beam is emitted to a first pixel of the detector, and the first pixel comprises N sub-pixels; and

a determining unit, configured to: determine N first optical sub-signals based on the N sub-pixels, wherein N is a positive integer; determine N first echo parameters based on the N first optical sub-signals, wherein the first echo parameter represents signal strength of the first optical sub-signal; and determine a first optical signal based on the N first echo parameters, wherein the first optical signal corresponds to the echo beam.

16. The apparatus according to claim 15, wherein the determining unit is specifically configured to:

determine a first sub-histogram based on the first optical sub-signal, wherein the first sub-histogram comprises a change trend of the signal strength of the first optical sub-signal in a plurality of unit time periods; and

determine the first echo parameter based on the first sub-histogram.

17. The apparatus according to claim 15 or 16, wherein the determining unit is specifically configured to: determine N first echo parameters based on the N first optical sub-signals, wherein the first echo parameter represents the signal strength of the first optical sub-signal; determine N first compensation sub-amounts based on the N first echo parameters; and determine a first compensation amount based on the N first compensation sub-amounts, wherein the first compensation amount is used to determine a compensation amount of the first optical signal.

18. The apparatus according to claim 17, wherein the determining unit is specifically configured to:

obtain, based on a geometric parameter of the sub-pixel, a corresponding first compensation table through screening and

search the first compensation table based on the first echo parameter to determine a first compensation sub-amount corresponding to the first echo parameter, wherein the first compensation table is determined in advance through an experiment, and the first compensation table comprises a mapping relationship between the first echo parameter and the first compensation sub-amount.

19. The apparatus according to claim 18, wherein the geometric parameter of the sub-pixel comprises a shape and/or an area of the sub-pixel.

20. The apparatus according to any one of claims 15 to 19, wherein the first echo parameter comprises at least one of the following: an echo area, an echo peak value, and an echo pulse width that are of the first optical sub-signal, and a rising edge slope of a curve image in the first sub-histogram.

21. The apparatus according to any one of claims 15 to 20, wherein the determining unit is further configured to:

determine a first result value based on the second optical signal, wherein the second optical signal is an original optical signal determined based on the echo beam; and

compensate the first result value based on the first compensation amount, to determine a first target parameter value, wherein the first target parameter value corresponds to the first optical signal.

22. The apparatus according to claim 21, wherein the determining unit is specifically configured to:

determine a first histogram based on the second optical signal, wherein the first histogram comprises a change trend of signal strength of the second optical signal in a plurality of unit time periods; and
determine the first result value based on the first histogram.

23. The apparatus according to claim 22, wherein when the first result value is a distance from the target object, the determining unit is specifically configured to:

determine a moment at which a laser beam is emitted to the target object as a first moment;
determine a second moment based on the first histogram;
determine, based on a time difference between the second moment and the first moment, time of flight corresponding to the second optical signal; and
determine the first result value based on a speed of light and the time of flight.

24. The apparatus according to claim 23, wherein the determining unit is specifically configured to:

determine, based on the first histogram, a start moment at which the second optical signal is detected as the second moment; or
use a peak moment of the first histogram as the second moment based on the first histogram; or
determine the second moment based on the first histogram through constant fraction timing CFD; or
determine, based on the first histogram, echo time corresponding to the second optical signal, and then determine, according to a centroid algorithm, the second moment based on the echo time corresponding to the second optical signal.

25. The apparatus according to claim 22, wherein when the first result value is an energy value of the second optical signal, the determining unit is specifically configured to:

determine an echo area and/or an echo peak value of the second optical signal based on the first histogram;
determine the signal strength of the second optical signal based on the echo area and/or the echo peak value of the second optical signal; and
determine the first result value based on the signal strength of the second optical signal.

26. The apparatus according to any one of claims 15 to 25, wherein before the determining unit determines the first compensation amount based on the N first echo parameters, the determining unit is further configured to:
determine the first compensation table, comprising:

obtaining a second target parameter value and the geometric parameter of the sub-pixel, wherein the second target parameter value is an accurate target parameter value;
determining the first optical sub-signal obtained based on the sub-pixel;
determining a second result value based on the first echo parameter corresponding to the first optical sub-signal, wherein the second result value is a result value that needs to be compensated;
determining the first compensation sub-amount based on the second result value and the second target parameter value;
recording the first echo parameter corresponding to the first optical sub-signal, to determine the mapping relationship between the first echo parameter and the first compensation sub-amount; and
adding the mapping relationship to the first compensation table corresponding to the geometric parameter of the sub-pixel.

27. The apparatus according to any one of claims 15 to 26, wherein the N sub-pixels are obtained through division based on a single-photon avalanche diode SPAD in a pixel array.

28. The apparatus according to any one of claims 15 to 27, wherein the echo beam is emitted to the pixel array to form a light spot, and a part of the light spot on each sub-pixel is evenly distributed.

29. A detection apparatus, comprising a processor and a memory, wherein the processor is connected to the memory, the memory is configured to store program code, and the processor is configured to invoke the program code to perform the method according to any one of claims 1 to 14.

30. A chip system, wherein the chip system is used in an electronic device; the chip system comprises one or more interface circuits and one or more processors; the interface circuit and the processor are interconnected through a line; the interface circuit is configured to: receive a signal from a memory of the electronic device, and send the signal to the processor, wherein the signal comprises computer instructions stored in the memory; and when the processor executes the computer instructions, the electronic device performs the method according to any one of claims 1 to 14.

**EP 4 671 819 A1**

**31.** A computer-readable storage medium, wherein the computer-readable storage medium stores a computer program, and the computer program is executed by a processor to implement the method according to any one of claims 1 to 14.

**32.** A computer program product, wherein when the computer program code or the instructions are executed on a computer, the computer is enabled to perform the method according to any one of claims 1 to 14.

**33.** A vehicle, comprising the apparatus according to any one of claims 15 to 29.

FIG. 1

FIG. 2

S310: Receive an echo beam, where the echo beam is emitted to a first pixel of a detector, and the first pixel includes N sub-pixels

S320: Determine N first optical sub-signals based on the N sub-pixels

S330: Determine N first echo parameters based on the N first optical sub-signals, where the first echo parameter represents signal strength of the first optical sub-signal

S340: Determine a first optical signal based on the N first echo parameters, where the first optical signal corresponds to the echo beam

FIG. 3

Pixel array

First pixel     First sub-pixel     First pixel     First sub-pixel

Activation region     SPAD

FIG. 4

FIG. 5

Signal strength of a
second optical signal

First histogram

First detection threshold

Time

Signal strength of a
first optical sub-signal

First sub-histogram

Second detection
threshold

Time

FIG. 6

First pixel

First sub-pixel

Memory

Memory

Memory

Memory

Accumulator → First histogram

First sub-histogram 3
First sub-histogram 4
First sub-histogram 2
First sub-histogram 1

FIG. 7

S810: Determine a moment at which a laser beam is emitted to a target object as a first moment

S820: Determine a second moment based on a first histogram

S830: Determine, based on a time difference between the second moment and the first moment, time of flight corresponding to a second optical signal

S840: Determine a first result value based on a speed of light and the time of flight

FIG. 8

S910: Determine an echo area and/or a peak value of a second optical signal based on a first histogram

S920: Determine signal strength of the second optical signal based on the echo area and/or the peak value of the second optical signal

S930: Determine a first result value based on the signal strength of the second optical signal

FIG. 9

S1010: Obtain a second target parameter value and a geometric parameter of a sub-pixel, where the second target parameter value is an accurate target parameter value

S1020: Determine a first optical sub-signal obtained based on the sub-pixel

S1030: Determine a second result value based on the first optical sub-signal, where the second result value is a result value that needs to be compensated

S1040: Determine a first compensation sub-amount based on the second target parameter value and the second result value

S1050: Record a first echo parameter corresponding to the first optical sub-signal in this case, to determine a mapping relationship between the first echo parameter and the first compensation sub-amount

S1060: Add the mapping relationship to a first compensation table corresponding to the geometric parameter of the sub-pixel

FIG. 10

FIG. 11(a)

FIG. 11(b)

Energy compensation sub-amount

Echo pulse width

FIG. 11(c)

Energy compensation sub-amount

Echo peak value

FIG. 11(d)

FIG. 12

FIG. 13

## INTERNATIONAL SEARCH REPORT

| International application No. |
|---|
| **PCT/CN2023/082046** |

**A. CLASSIFICATION OF SUBJECT MATTER**

G01S 7/4865(2020.01)i

According to International Patent Classification (IPC) or to both national classification and IPC

**B. FIELDS SEARCHED**

Minimum documentation searched (classification system followed by classification symbols)

IPC: G01S

Documentation searched other than minimum documentation to the extent that such documents are included in the fields searched

Electronic data base consulted during the international search (name of data base and, where practicable, search terms used)

CNABS: CNTXT; CNKI; 万方, WANFANG; 超星, CHAOXING; VEN; USTXT; EPTXT; WOTXT; IEEE: 回波, 光束, 探测器, 像素, 信号, 参数, 强度, 子像素, 补偿, echo, beam, detector?, signal, pixel, compensat+, intens+

**C. DOCUMENTS CONSIDERED TO BE RELEVANT**

| Category* | Citation of document, with indication, where appropriate, of the relevant passages | Relevant to claim No. |
|---|---|---|
| A | CN 114236506 A (AOCHENG INFORMATION TECHNOLOGY (SHANGHAI) CO., LTD.) 25 March 2022 (2022-03-25) description, paragraphs [0006]-[0030] | 1-33 |
| A | CN 115343693 A (NINGBO RESEARCH INSTITUTE, NORTHWESTERN POLYTECHNICAL UNIVERSITY) 15 November 2022 (2022-11-15) entire document | 1-33 |
| A | CN 114442106 A (XI'AN ZHISENSOR TECHNOLOGY CO., LTD.) 06 May 2022 (2022-05-06) entire document | 1-33 |
| A | US 2009202127 A1 (KONINKL PHILIPS ELECTRONICS N.V.) 13 August 2009 (2009-08-13) entire document | 1-33 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 September 2023** | **02 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/082046** |

| Patent document cited in search report | | | Publication date (day/month/year) | Patent family member(s) | Publication date (day/month/year) |
| --- | --- | --- | --- | --- | --- |
| CN | 114236506 | A | 25 March 2022 | None | |
| CN | 115343693 | A | 15 November 2022 | None | |
| CN | 114442106 | A | 06 May 2022 | None | |
| US | 2009202127 | A1 | 13 August 2009 | None | |

Form PCT/ISA/210 (patent family annex) (July 2022)